# EUROPEAN PATENT APPLICATION

(11) **EP 4 827 066 A1**
(43) Date of publication of application: **21.10.2026**
(21) Application number: 25736418.2
(22) Date of filing: 03.01.2025
(51) Int. Cl.: H04L 45/24

(54) **COMMUNICATION METHOD AND COMMUNICATION APPARATUS**

(30) Priority: 05.01.2024 CN 202410016940
(71) Applicant: Huawei Technologies Co., Ltd., Shenzhen, Guangdong 518129 (CN)
(72) Inventor: XU, Yishan, Shenzhen, Guangdong 518129 (CN); XU, Shengfeng, Shenzhen, Guangdong 518129 (CN); ZHU, Wenruo, Shenzhen, Guangdong 518129 (CN); LI, Haoran, Shenzhen, Guangdong 518129 (CN)
(74) Representative: Gill Jennings & Every LLP
(86) International application number: PCT/CN2025/070595
(87) International publication number: WO 2025/146180

(57) **Abstract**

This application provides a communication method and a communication apparatus, to resolve a problem of reduced transmission efficiency when user equipment (user equipment, UE) accesses a network through at least two paths of a same access type. The method includes: receiving, by a first network element, capability information from a first path, where the capability information indicates that the UE supports multi-connectivity, and the first network element allocates, based on the capability information, a first path identifier corresponding to the first path. The first network element sends the first path identifier to the UE through the first path, so that the UE can determine the first path from the at least two paths by using the first path identifier.

## Description

This application claims priority to Chinese Patent Application No. 202410016940.3, filed with the China National Intellectual Property Administration on January 5, 2024, and entitled "Communication Method and Communication Apparatus." The entire content of the priority application is incorporated herein by reference.

### Technical Field

The embodiments of this application relate to the communications field, and more specifically, to a communication method and a communication apparatus.

### Background Technology

User equipment (user equipment, UE) and user plane function (user plane function, UPF) network elements may transmit service flow data that needs to be sent by establishing a multi-access session. This service flow data is simultaneously transmitted through a 3rd Generation Partnership Project (3rd generation partnership project, 3GPP) access network and/or a non-3GPP access network to improve transmission efficiency.

Currently, multi-access sessions support transmission through one 3GPP access type path and one non-3GPP access type path. For example, when a UE accesses a network through two 3GPP access type paths, the access network devices in the two paths are all 3GPP access type access network devices. Therefore, the UE can distinguish different paths based on the 3GPP access type.

In the future, multi-access sessions will support transmission through multiple 3GPP paths or multiple non-3GPP paths. For example, when a UE accesses a network through two 3GPP access type paths, the access network devices in the two paths are all 3GPP access type access network devices. As a result, the UE can select at least one path from the two paths for data transmission based on the 3GPP access type, thereby distinguishing the two paths. However, this leads to a reduction in transmission efficiency.

Therefore, in multi-access sessions, how to improve transmission efficiency for two paths of the same access type through different path identifiers is an urgent problem to be solved.

### Summary of the Invention

This application provides a communication method and a communication apparatus, which can enable a UE and a network to distinguish two paths of the same access type through different path identifiers, thereby improving transmission efficiency.

To achieve the above objectives, this application adopts the following technical solutions:
According to the first aspect, a communication method is provided. The method may be performed by a first network element, or may be performed by a chip or a circuit of the first network element. This is not limited in this application. For ease of description, the following uses an example in which the method is performed by the first network element for description.

The method includes: a first network element obtaining capability information, where the capability information indicates that the communication apparatus supports multiple connections, and the multiple connections include at least two paths with the same access type. The at least two paths include a first path connecting the communication apparatus and the first radio access network device. The first network element allocates a first path identifier corresponding to the first path based on the capability information. The first network element sends the first path identifier to the communication apparatus through the first path, where the first path identifier is used by the communication apparatus to determine the first path from at least two paths.

In the communication method provided based on the first aspect, the first network element obtains capability information indicating that the communication apparatus supports multiple connections. This enables the first network element to allocate a first path identifier corresponding to the first path, and then send the first path identifier to the communication apparatus through the first path. The first path identifier is used by the communication apparatus to determine the first path from at least two paths, and then the communication apparatus and the network distinguish two paths with the same access type through different path identifiers. The network and the communication apparatus negotiate the path transmission data corresponding to the path identifier, thereby improving transmission efficiency.

In a possible implementation, the first network element receives the capability information from the first path. For example, the first network element receives the capability information sent by the communication apparatuscommunication apparatus. Alternatively, the first network element obtains the capability information from the subscription data of the communication apparatus. For example, the first network element receives the subscription data from the data management network element, where the subscription data includes the capability information of the communication apparatus; or when the first network element is the data management network element, the first network element directly obtains the capability information of the communication apparatus from the subscription data.

In a possible implementation, the first network element receives a registration request message from the first path, where the registration request message includes the capability information.

In a possible implementation, the first network element sends a registration accept message to the communication apparatus by using the first path, where the registration accept message includes the first path identifier.

In a possible implementation, the first network element is an access and mobility management network element, and the access and mobility management network element sends the first path identifier to the session management network element. Receives, from the session management network element, a traffic steering rule that includes a first path identifier; and; sending an traffic steering rule to the communication apparatus, where the traffic steering rule is used by the communication apparatus to determine a transmission path of the service flow, and the transmission path is one or more of the at least two paths. The access and mobility management network element sends the first path identifier to the session management network element, so that the session management network element generates an traffic steering rule that includes the first path identifier. In addition, the communication apparatus may transmit, by using the traffic steering rule corresponding to the service data, the service data over the path corresponding to the path identifier, thereby improving transmission efficiency.

In a possible implementation, the access and mobility management network element selects, based on the capability information, a session management network element that supports multi-connectivity. The session management network element that supports multi-connectivity is a session management network element that supports generating a traffic steering rule that includes a first path identifier. The session management network element that supports multi-connectivity can be understood as a session management network element that can identify newly added parameters, such as path identifiers, and supports generating traffic steering rules that include path identifiers.

In a possible implementation, the first network element is an access and mobility management network element. The access and mobility management network element obtains information used to distinguish paths, where the information used to distinguish paths is different in at least two paths.

In a possible implementation, the access and mobility management network element obtains information used to distinguish paths, including: the access and mobility management network element receives, from a first radio access network device, the information used to distinguish paths; or the access and mobility management network element determines, based on the first radio access network device, the information used to distinguish paths.

In a possible implementation, the access and mobility management network element stores the first path identifier and information used to distinguish paths. Alternatively, the access and mobility management network element stores the first path identifier and the association relationship between the information used to distinguish paths. In this way, the corresponding information used to distinguish paths can be determined based on the first path identifier, and then data can be sent to the corresponding path based on the information used to distinguish paths.

In a possible implementation, the access and mobility management network element selects, based on the capability information, a data management network element that supports multi-connectivity. The data management network element that supports multi-connectivity is a data management network element that supports storing multiple contexts of the communication apparatus.

In a possible implementation, the information used to distinguish paths is one or more of the following information: location information, access technology type, registration type, and an identifier of the first radio access network device. The location information indicates information about an access node of a network accessed by the communication apparatus. The access technology type indicates an access technology type of a network accessed by the communication apparatus through the first path. The registration type indicates a registration type of a network registered by the communication apparatus through the first path.

In one possible implementation, the first network element is a data management network element. Before the first network element allocates the first path identifier corresponding to the first path based on the capability information, the method further includes: the data management network element queries the subscription data of the communication apparatus. When the subscription data of the communication apparatus indicates that the communication apparatus is authorized to access the network through multi-connectivity, the first path identifier is allocated.

In one possible implementation, the data management network element receives, from the access and mobility management network element, information used to distinguish paths. The information used to distinguish paths is different in at least two paths.

In one possible implementation, the data management network element stores the first path identifier and the information used to distinguish paths.

In one possible implementation, the data management network element sends, to the session management network element and/or the data storage network element, the first path identifier and the information used to distinguish paths. The information used to distinguish paths is used by the session management network element to distinguish between different paths.

In a possible implementation, the first network element is a session management network element. The method further includes: the session management network element receives, from the access and mobility management network element, information used to distinguish paths, wherein the information used to distinguish paths is different in at least two paths.

In a possible implementation, the session management network element stores the first path identifier and information used to distinguish paths.

In a possible implementation, the session management network element sends the first path identifier and information used to distinguish paths to the access and mobility management network element.

In a possible implementation, the session management network element generates a traffic steering rule that includes a first path identifier, and sends the traffic steering rule to the communication apparatus. The traffic steering rule is used by the communication apparatus to determine a transmission path of a service flow.

In a possible implementation, the traffic steering rule includes a priority of the first path, and the information used to distinguish paths is used to determine the priority of the first path.

In a possible implementation, the session management network element selects, based on the capability information, a user plane network element that supports multiple connections. The user plane network element that supports multiple connections is a user plane network element that supports traffic steering/splitting according to a traffic steering rule that includes a first path identifier.

In a possible implementation, the information used to distinguish paths is one or more of the following information: location information, access technology type, registration type, an identifier of the first radio access network device, an identifier of the access and mobility management network element. The location information indicates information about an access node of a network accessed by the communication apparatus. The access technology type indicates an access technology type of a network accessed by the communication apparatus through the first path. The registration type indicates a registration type of a network registered by the communication apparatus through the first path.

In a possible implementation, the first network element is a policy control network element, and the method further includes: receiving, by the policy control network element, information used to distinguish paths, where the information used to distinguish paths is different in at least two paths.

In a possible implementation, that the first network element allocates, based on the capability information, the first path identifier corresponding to the first path includes: allocating, by the policy control network element, based on the path differentiation information and the capability information, the first path identifier corresponding to the first path.

In a possible implementation, the policy control network element stores the first path identifier and the information used to distinguish paths.

In a possible implementation, the policy control network element generates a policy rule or a routing rule, where the policy rule or the routing rule includes the first path identifier; sending a policy rule or a routing rule to the communication apparatus.

In a possible implementation, access types corresponding to the at least two paths with a same access type are a 3rd Generation Partnership Project 3GPP access type or a non-3rd Generation Partnership Project 3GPP access type.

According to a second aspect, a communication method is provided. The method may be performed by a communication apparatus, or may be performed by a chip or a circuit of the communication apparatus. This is not limited in this application. For ease of description, the following uses an example in which the communication apparatus performs the following description.

The method includes: receiving, by a communication apparatus, a first path identifier by using a first path connecting the communication apparatus and a first radio access network device, and receiving a second path identifier by using a second path connecting the communication apparatus and a second radio access network device; and; receiving, by a communication apparatus, an traffic steering rule, where the traffic steering rule includes service flow information, and a first path identifier and/or a second path identifier; The communication apparatus determines, based on the first path identifier and/or the second path identifier, the transmission path of the service flow corresponding to the service flow information.

In the communication method provided based on the second aspect, the communication apparatus receives the first path identifier by using the first path, and receives the second path identifier by using the second path; and; Then, the communication apparatus transmits, according to the traffic steering rule corresponding to the service flow and the first path identifier and/or the second path identifier in the traffic steering rule, the service flow data by using the path corresponding to the path identifier, thereby improving transmission efficiency.

In a possible implementation, before the communication apparatus receives the first path identifier and the second path identifier, the communication apparatus sends capability information, where the capability information indicates that the communication apparatus supports multiple connections, the multiple connections include at least two paths with a same access type, and the at least two paths include the first path and the second path. The communication apparatus sends the capability information of supporting multi-connections, so that the network allocates different path identifiers to the communication apparatus according to different paths through which the communication apparatus accesses the network. For example, the network allocates the first path identifier to the first path, and allocates the second path identifier to the second path.

In a possible implementation, the communication apparatus sends the first registration request message to the network through the first path, and/or sends the second registration request message to the network through the second path. The communication apparatus receives the first path identifier through the first path, and receives the second transmission path identifier through the second path, including: The communication apparatus receives the first registration accept message through the first path, where the first registration accept message includes the first path identifier; and receives the second registration accept message through the second path, where the second registration accept message includes the second path identifier.

In a possible implementation, the traffic steering rule includes a priority of the first path and/or a priority of the second path. Before the communication apparatus determines, based on the first path identifier and/or the second path identifier, a transmission path of a service flow, the method further includes: The communication apparatus determines, based on the priority of the first path and/or the priority of the second path, the path identifier of the transmission path of the service flow.

In a possible implementation, the communication apparatus determines, based on the first path identifier and/or the second path identifier, the transmission path of the service flow corresponding to the service flow information, including: The communication apparatus determines, based on the first path identifier, that the service flow corresponding to the service flow information is transmitted on the first path; and/or determines, based on the second path identifier, that the service flow corresponding to the service flow information is transmitted on the second path.

In a possible implementation, the communication apparatus stores the first path identifier and the first path information, as well as the second path identifier and the second path information. The first path information is used by the communication apparatus to determine the first path, and the second path information is used by the communication apparatus to determine the second path.

In a possible implementation, the first path information is one or more of the following information: an access technology type corresponding to the first path, a registration type of the first path, a protocol stack used by the first path, a port corresponding to the first path, an interface corresponding to the first path, a link corresponding to the first path, or an identifier of the first radio access network device. The second path information is one or more of the following information: an access technology type corresponding to the second path, a registration type of the second path, a protocol stack used by the second path, a port corresponding to the second path, an interface corresponding to the second path, a link corresponding to the second path, or an identifier of the second radio access network device.

In a possible implementation, the at least two paths corresponding to the same access type correspond to an access type of a 3rd Generation Partnership Project 3GPP access type or a non-3rd Generation Partnership Project 3GPP access type.

According to the third aspect, a communication apparatus is provided. The communication apparatus includes: a module configured to perform any communication method executed by the first network element described above, such as a transceiver module and a processing module. The transceiver module is configured to perform corresponding message sending and receiving actions, and the processing module may be configured to perform all actions except for sending and receiving information.

Optionally, the communication apparatus according to the third aspect may further include a storage module. The storage module stores a program or instructions. When the processing module executes the program or instructions, the communication apparatus can perform any communication method executed by the first network element described above.

According to the fourth aspect, a communication apparatus is provided. The communication apparatus includes: a module configured to perform any communication method executed by the communication apparatus described above, such as a transceiver module and a processing module. The transceiver module is configured to perform corresponding message sending and receiving actions, and the processing module may be configured to perform all actions except for sending and receiving information.

Optionally, the communication apparatus according to the fourth aspect may further include a storage module. The storage module stores a program or instructions. When the processing module executes the program or instructions, the communication apparatus can perform any communication method performed by the communication apparatus in the methods described above.

According to the sixth aspect, a communication system is provided, including: a first network element, where the first network element is configured to perform the method in the first aspect and any one of the possible implementations of the first aspect.

Optionally, the communication system further includes a communication apparatus, where the communication apparatus is configured to perform the method in the second aspect and any one of the possible implementations of the second aspect.

According to the sixth aspect, a computer-readable storage medium is provided. The computer-readable storage medium stores a computer program or code. When the computer program or code is run on a computer, the computer is enabled to perform the method in any one of the first aspect to the second aspect and any one of the possible implementations of the first aspect to the second aspect.

According to the seventh aspect, a chip is provided, including at least one processor. The at least one processor is coupled to a memory. The memory is configured to store a computer program. The processor is configured to invoke and run the computer program from the memory, so that an apparatus in which the chip system is installed performs the method in any one of the first aspect to the second aspect and any one of the possible implementations of the first aspect to the second aspect.

Among them, the chip may include an input circuit or interface configured to send information or data, and an output circuit or interface configured to receive information or data.

According to an eighth aspect, a computer program product is provided. The computer program product includes computer program code. When the computer program code runs on the computer, the method in any one of the first aspect to the second aspect and any one of the possible implementations of any one of the first aspect to the second aspect is performed.

### Description of the accompanying drawings

FIG. 1 is a schematic diagram of a communication system according to an embodiment of this application.
FIG. 2 is a schematic diagram of a registration procedure in a 3GPP access technology according to an embodiment of this application.
Figure 3 is a schematic diagram of a multi-access session establishment procedure according to an embodiment of this application.
Figure 4 is a possible form of a procedure in which UE accesses a network and/or establishes a multi-access session according to an embodiment of this application.
Figure 5 is another possible form of a procedure in which UE accesses a network and/or establishes a multi-access session according to an embodiment of this application.
Figure 6 is a schematic diagram of a procedure of a communication method 600 according to an embodiment of this application.
Figure 7 is a schematic diagram of a procedure of a communication method 700 according to an embodiment of this application.
FIG. 8 is a schematic flowchart of a communication method 800 according to an embodiment of this application.
FIG. 9 is a schematic flowchart of a communication method 900 according to an embodiment of this application.
FIG. 10 is a schematic flowchart of a communication method 1000 according to an embodiment of this application.
FIG. 11 is a schematic flowchart of a communication method 1100 according to an embodiment of this application.
FIG. 12 is a schematic flowchart of a communication method 1200 according to an embodiment of this application.
FIG. 13 is a schematic flowchart of a communication method 1300 according to an embodiment of this application.
FIG. 14 is a schematic flowchart of a communication method 1400 according to an embodiment of this application.
FIG. 15 is a schematic flowchart of a communication method 1500 according to an embodiment of this application.
FIG. 16 is a schematic flowchart of a communication method 1600 according to an embodiment of this application.
FIG. 17 is a schematic structural diagram of a communication apparatus 1000 according to an embodiment of this application.
FIG. 18 is a schematic structural diagram of a communication apparatus 2000 according to an embodiment of this application.
FIG. 19 is a schematic structural diagram of a chip system 3000 according to an embodiment of this application.

### Description of Embodiments

The following describes the technical solutions in this application with reference to the accompanying drawings.

The technical solutions provided in this application can be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can also be applied to device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, loT) communication system or another communication system.

In a communication system, the portion operated by the operator can be referred to as a public land mobile network (public land mobile network, PLMN), or it can also be referred to as an operator network, etc. The PLMN is a network established and operated by the government or its approved operators, with the purpose of providing the public with land mobile communications services. It is primarily a public network where mobile network operators (mobile network operator, MNO)) provide users with mobile broadband access services. The PLMN described in the embodiments of this application can specifically be a network that meets the requirements of the 3rd Generation Partnership Project (3rd generation partnership project, 3GPP)) standards, and is referred to as a 3GPP network. The 3GPP network typically includes, but is not limited to, a 5th generation mobile communications (5th-generation, 5G) network, a 4th generation mobile communications (4th-generation, 4G) network, and other future communication systems, such as a 6th generation mobile communications (6th-generation, 6G) network, etc.

For ease of description, a PLMN or a 5G network is used as an example for description in this embodiment of this application.

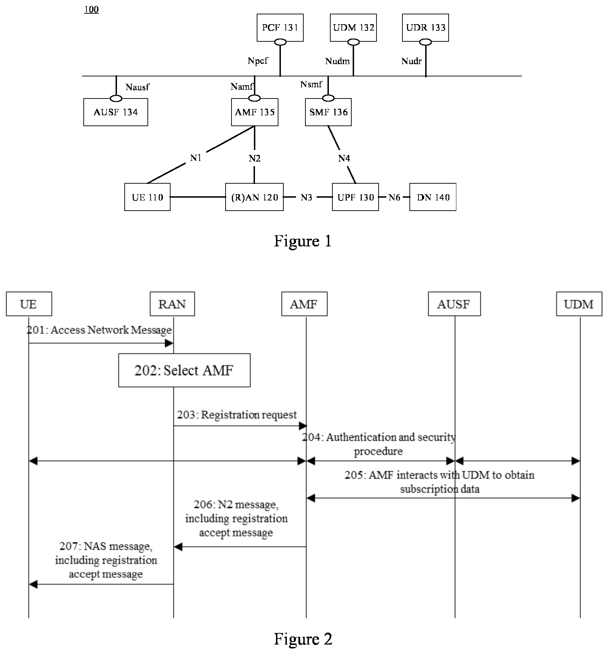

FIG. 1 is a schematic diagram of a network architecture. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes the functions of the network elements of each part.

The terminal device part may include a UE 110, where the UE 110 is a device that provides voice and/or data connectivity to a user. The UE 110 may also be referred to as user equipment UE. The UE 110 in this application is a device with a radio transceiver function, and may communicate with one or more CN devices by using an access network device (or may also be referred to as an access device) in the (radio) access network (R)AN 120. The UE 110 may also be referred to as an access terminal, a terminal, a subscriber unit, a subscriber station, a mobile station, a mobile station, a remote station, a remote terminal, a mobile device, a user terminal, a user agent, a user device, or the like. The UE 110 may be deployed on land, including indoors or outdoors, handheld, or vehicle-mounted. It can also be deployed on the water surface (e.g., a ship). It can also be deployed in the air (e.g., on aircraft, balloons, satellites, etc.). The UE 110 may be a cellular phone, a cordless phone, a session initiation protocol (SIP) phone, a smart phone, a mobile phone, a wireless local loop (WLL) station, a personal digital assistant (PDA), or the like. Alternatively, the UE 110 may be a handheld device with a wireless communication function, a computing device, or another device connected to a wireless modem, an in-vehicle device, a wearable device, an unmanned aerial vehicle device, or a terminal in the Internet of Things, the Internet of Vehicles, a 5G network, or a terminal in any form in a future network, or a relay user equipment, a terminal in a future evolved 6G network, or the like. For example, the relay user equipment may be a 5G home gateway (residential gateway, RG). For example, the UE 110 may be a virtual reality (virtual reality, VR) terminal, an augmented reality (augmented reality, (AR) terminals, wireless terminals in industrial control, wireless terminals in driverless, wireless terminals in telemedicine, wireless terminals in smart grids, wireless terminals in transportation security, wireless terminals in smart cities, and wireless terminals in smart homes. The terminal device herein refers to a 3GPP terminal. In this application, the terminal device may include a terminal device that has one or more subscription data, a terminal device that includes one or more universal subscriber identity modules (Universal Subscriber Identity Module, USIM), or a terminal device that includes one or more UEs. For example, the terminal device may be referred to as a dual steer device. In a possible implementation, the terminal device may separately access a network by using different subscription data to perform registration, to establish a plurality of connections or paths. A type, a type, or the like of the terminal device is not limited in this embodiment of this application. For ease of description, an example in which UE refers to a terminal device is used for description in this application.

The (R)AN 120 may include one or more access network elements or access network devices, and an interface between the access network device and the terminal device may be a Uu interface (or referred to as an air interface, that is, a message exchanged between the access network device and the terminal device may be referred to as an air interface message). Certainly, in future communication, the interface name may remain unchanged, or may be replaced by another name. This is not limited in this application. The (R)AN 120 is a device that provides a wireless communication function for the terminal device 110. The (R)AN 120 may connect the terminal device to a node or device in a wireless network, and may also be referred to as a network device. The (R)AN 120 may be considered as a subnet of the operator network, and is an implementation system between the service node and the terminal device 110 in the operator network. For example, the terminal device 110 may be connected to a service node in a carrier network by using the (R)AN 120, to obtain a service provided by the service node. The (R)AN 120 includes but is not limited to a next generation node base station node (next generation node base station, gNB) in a 5G system, and an evolved node B (evolved node B) in a long term evolution (long term evolution, LTE). eNB), a radio network controller (RNC), a node B (node B, NB), a base station controller (base station controller, BSC), a base transceiver station (base transceiver station, BTS), and a home base station (for example, home evolved nodeB, or home nodeB, HNB), a base band unit (base band unit, BBU), a transmission and receiving point (transmitting and receiving point, TRP), a transmission point (transmitting point, TP), a small cell device, a mobile switching center, a network device in a future network, or the like. The access network device may also be a module or a unit that implements a function of a base station, for example, including a centralized unit (central unit, CU) and a distributed unit (distributed unit, DU). In a possible network structure, the CU may be configured to support radio resource control (radio resource control, RRC), a packet data convergence protocol (packet data convergence protocol, PDCP), and a service data adaptation protocol (service data adaptation protocol). Communication under protocols such as SDAP) The DU may be configured to support communication under a radio link control (radio link control, RLC) layer protocol, a medium access control (medium access control, MAC) layer protocol, and a physical layer protocol. A specific technology and a specific device form used by the access network device are not limited in this embodiment of this application. In systems that use different radio access technologies, names of devices having an access network device function may be different. For ease of description, in all the embodiments of this application, the foregoing apparatuses that provide a wireless communication function for the terminal device 110 are collectively referred to as an access network device or a RAN for short. It should be understood that a specific type of the access network device is not limited in this specification.

The CN part may include but is not limited to the following network functions (network function, NF): user plane function (user plane function, UPF) 130, policy control function (policy control function, PCF) 131, unified data management function (unified data management, UDM) 132, unified data repository function (unified data repository, UDR) 133, authentication server function (authentication server function, AUSF) 134, access and mobility management function (access and mobility management function, AMF) 135, session management function (session management function, SMF) 136.

The data network DN 140 is usually a network located outside a carrier network, for example, a third-party network or an Internet service.

The following further briefly describes the NF functions included in the CN.
1. The UPF 130 is a gateway provided by an operator, and is a gateway for communication between the operator network and the DN 140. The UPF 130 network function includes user plane-related functions such as data packet routing and transmission, data packet detection, service usage reporting, quality of service (quality of service, QoS) processing, legal interception, uplink data packet detection, and downlink data packet storage. In the future communication system, the user plane function network element may still be a UPF network element, or may have another name. This is not limited in this application.
2. The PCF 131 is a control plane function provided by an operator, mainly supports providing a unified policy framework to control network behavior, provides a policy rule for a control layer network function, and is responsible for obtaining user subscription information related to policy decision. For example, the PCF 131 may be divided into two PCFs with different functions. For example, the PCF is divided into two functions: a UE-PCF and an AMF-PCF. The UE-PCF may be configured to generate a UE policy (UE policy), that is, a policy sent to the UE 110. A sending path is UE-PCF--->AMF--->UE. In this case, the AMF does not parse content of the UE policy, that is, the AMF transparently transmits the UE policy. The AM-PCF may be configured to generate an AM policy, that is, a policy used for access management that is sent to the AMF. A sending path is: AMF-PCF--->AMF. Further, the AMF may further send a part or all of the access management policy to the RAN 120. In still another example, the PCF 131 may be divided into an AM-PCF and an SM-PCF. The AM-PCF and the SM-PCF may be located on a same PCF or different PCFs. The AM-PCF is mainly responsible for access mobility policy control, for example, may generate a UE route selection policy (UE route selection policy, URSP). The SM-PCF is mainly responsible for session management policy control, for example, may generate a policy and charging control rule (policy and charging control rule, PCC rule). In the future communication system, the policy control function network element may still be a PCF network element, or may have another name. This is not limited in this application.
3. UDM 132 is a control plane function provided by an operator. It is responsible for storing information such as the subscriber permanent identifier (SUPI) of subscribers who have subscribed to the operator's network, the public subscription identifier (GPSI) for public use by subscribers, and credentials. During transmission, the SUPI is first encrypted, and the encrypted SUPI is referred to as a hidden subscription concealed identifier (SUCI). The information stored by the UDM network function 132 can be used for authentication and authorization when UE 110 accesses the operator's network. Specifically, the subscribers of the operator's network mentioned above can be users who use the services provided by the operator's network. For example, users using a SIM card of China Telecom, or users using a SIM card of China Mobile, etc. The credential of the above-mentioned subscribers can be a small file saved in the mobile phone chip card, such as a long-term key or information related to encryption of the mobile phone chip card, which is used for authentication and/or authorization. In future communication systems, the unified data management function network element may still be a UDM network element, or may have another name. This application does not impose any limitation.
4. UDR 133 is a control plane function provided by an operator. It provides the UDM with the function of storing and obtaining subscription data, and provides the PCF with the function of storing and obtaining policy data, storing and obtaining the NF group ID (group ID) information of the user, and the like. In future communication systems, the unified data repository function network element may still be a UDR network element, or may have another name. This application does not impose any limitations.
5. AUSF 134 is a control plane function provided by an operator, and is typically used for level-1 authentication, that is, authentication between the UE 110 (a subscription user) and the operator network. After receiving an authentication request initiated by the subscription user, the AUSF network function 134 may perform authentication and/or authorization on the subscription user by using the authentication information and/or the authorization information stored in the UDM network function 134, or may generate, by using the UDM network function 134, the authentication and/or authorization information of the subscription user. The AUSF network function 134 may feed back the authentication information and/or the authorization information to the subscription user. In future communication systems, the authentication server function network element may still be an AUSF network element, or may have another name. This application does not impose any limitations.
6. The AMF 135 is a control plane network function provided by the operator network, and is responsible for access control and mobility management when the UE 110 accesses the operator network, for example, including functions such as mobility status management, temporary user identity allocation, and user authentication and authorization. In the future communication system, the access management network element may still be an AMF network element, or may have another name. This is not limited in this application.
7. The SMF 136 is a control plane network function provided by the operator network, and manages a protocol data unit (protocol data unit, PDU) session (including session establishment, modification, and release) of the UE 110. is used for user plane function network element selection and reselection, Internet Protocol (internet protocol, IP) address allocation of the terminal device, quality of service (quality of service, QoS) control, and the like. The PDU session is a channel used to transmit a PDU, and the terminal device and the DN 140 transmit a PDU to each other by using the PDU session. The SMF network function 136 is responsible for establishing, maintaining, deleting, and the like the PDU session. SMF network function 136 includes session management (e.g., session establishment, modification, and release, including user plane functions UPF 130 and (R) session-related functions, such as tunnel maintenance between the ANs 120, selection and control of UPF network functions 130, service and session continuity (SSC) mode selection, roaming, and the like. In the future communication system, the session management function network element may still be an SMF network element, or may have another name. This is not limited in this application.

It can be understood that the foregoing network element or function may be a physical entity in a hardware device, or may be a software instance running on dedicated hardware, or may be a virtualized function instantiated on a shared platform (for example, a cloud platform). In short, an NF may be implemented by hardware, or may be implemented by software.

In Figure 1, Npcf, Nudm, Nudr, Nausf, Namf, Nsmf, N1, N2, N3, N4, and N6 are interface sequence numbers. For example, the meanings of the above interface sequence numbers may be referred to the meanings defined in the 3GPP standard protocol. This application does not impose any limitation on the meanings of the above interface sequence numbers. It should be noted that the names of the interfaces between the various network functions in Figure 1 are merely examples. In specific implementation, the names of the interfaces in the system architecture may also be other names. This application does not impose any limitation on this. In addition, the names of the messages (or signaling) transmitted between the various network elements are also merely examples, and do not impose any limitation on the functions of the messages themselves.

It should be noted that in the architecture shown in Figure 1, the interface between the radio access network and the 5G core network is referred to as the NG interface (not shown in the figure). The gNBs are connected to each other through the Xn interface. The gNB and the 5GC are connected through the NG interface. Among them, the NG interface includes the NG-C interface and the NG-U interface. The NG-C interface is a control plane interface, connecting the gNB and the AMF, and transmitting control plane data. The NG-U interface is a user plane interface, connecting the gNB and the UPF, and transmitting user plane data. The main functions of the NG interface include but are not limited to: paging, UE context connection, UE mobility management, PDU session management, NAS signaling transmission, etc.

It should be understood that the network architecture 100 described above is merely a network architecture described from the perspective of a service-based architecture. In this service-based architecture, the PLMN may, according to the requirements of specific scenarios, orderly and as needed combine some or all of the network functions, thereby achieving the customization of network capabilities and services. This allows for the deployment of dedicated networks for different services, that is, the implementation of 5G network slicing (network slicing). The network slicing technology enables operators to respond more flexibly and quickly to customer needs, and supports flexible allocation of network resources.

For ease of description, network functions (such as the UPF 130...SMF 136) are collectively referred to as/abbreviated as an NF in the embodiments of this application. In other words, the NF described below in the embodiments of this application may be replaced with any network function. In addition, the UE 110 is referred to as UE in this embodiment of this application, that is, all UE described in the following embodiments of this application may be replaced with a terminal device. FIG. 1 schematically describes only some network functions, and the NF described later is not limited to the network functions shown in FIG. 1.

It should be understood that the AMF, the SMF, the UPF, the AUSF, the PCF, the UDM, and the UDR shown in FIG. 1 may be understood as network elements that are in a core network and configured to implement different functions, for example, may be combined as required to form a network slice. These core network network elements may be independent devices of each other, or may be integrated into a same device to implement different functions. This application imposes no limitation on specific forms of the foregoing network elements.

It should be further understood that the foregoing names are defined only for the convenience of distinguishing different functions, and shall not constitute any limitation on this application. This application does not exclude a possibility that another name is used in the 5G network and another future network. For example, in the 6G network, some or all of the foregoing network elements may use 5G terms, or may use other names or the like.

To facilitate understanding of the embodiments of this application, the following describes some terms in the embodiments of this application, so as to facilitate understanding by a person skilled in the art.

### (1) Access type and access technology type:

Access types include 3GPP access types and non-3GPP access types.

The 3GPP access type includes but is not limited to the following access technologies: an LTE access technology (corresponding to a 4G cellular network), an NR access technology (corresponding to a 5G cellular network), a satellite access technology defined by the 3GPP, or a subsequent evolved cellular access technology. Satellite access technologies defined by 3GPP can be further divided into low-orbit satellites, medium-orbit satellites, and synchronous satellites. The 3GPP access network means that an access type of the access network is a 3GPP access type (the access type may also be referred to as an access mode).

The non-3GPP access type includes but is not limited to the following access technologies: untrusted non-3GPP access (untrusted non-3GPP access) technology (e.g., access to the core network through a radio access node purchased by an individual) 2. Trusted non-3GPP access technology (For example, access to the core network through a radio access node deployed by an operator) 2. Wireline access technology (e.g. Cable-Broadband Forum (BBF)) an access technology, a wired-cable access technology, and the like), an IEEE 802.11 access technology, and a non-3GPP access technology connected by a standalone non-public network (SNPN). For example, an access manner in which a non-3GPP access technology is used may include a wired access manner, a wireless fidelity (Wireless Fidelity, WiFi), a Bluetooth access manner, and a ZigBee (ZigBee) access manner. A non-3GPP access network means that the access type of the access network is a non-3GPP access type.

2) The registration procedure includes but is not limited to: the registration procedure under the 3GPP access type, the registration procedure under the non-trusted non-3GPP access technology, the registration procedure under the trusted non-3GPP access technology, and the registration procedure under the wired access technology.

As shown in Figure 2, the possible registration procedure of UE in a 3GPP access type in the current technology is described.

Step 201: The UE sends an access network (access network, AN) message to a RAN.

Among them, the AN message includes an AN parameter and a registration request (Registration Request) message. The AN parameter includes parameter information used by the RAN to select an AMF. The parameter information may include one or more of the following: a globally unique AMF identifier (globally unique AMF identifier, GUAMI)), a public land mobile network (public land mobile network, PLMN) identifier, a network identifier (network identification, NID)), and the like. The registration request message includes a registration type (Registration Type)), a UE identifier, and the like. The registration type may be an initial registration, a mobility registration update, and the like. The UE identifier may be an anonymous user hidden identifier (Subscription Concealed Identifier, SUCI)) or a 5G globally unique temporary identifier (5G globally unique temporary identity, 5G-GUTI)), and the like.

Step 202: The RAN selects an AMF based on the AN parameter.

The AN parameter is the AN parameter in the AN message in Step 201.

Step 203: The RAN sends the registration request message received in Step 201 to the AMF selected in Step 202.

Step 204: The UE, AMF, AUSF, UDM, and other entities interact to perform an authentication and security procedure.

For example, first, the AMF selects the AUSF and sends an authentication request message to the AUSF. The AUSF performs an authentication procedure on the UE and obtains authentication data or information used for authentication from the UDM. After the authentication is completed, the AUSF sends a security anchor function (security anchor functionality, SEAF) key to the AMF. The AMF can derive and obtain a NAS security key based on the SEAF key.

Then, the AMF indicates to the UE that the authentication is successful. For example, the AMF sends a NAS Security Mode Command to the UE to activate NAS security. The NAS Security Mode Command includes an EAP success indication (EAP-Success), indicating that the EAP authentication and key agreement (EAP- authentication and key agreement, EAP-AKA') performed by the core network is successful. The RAN forwards the NAS Security Mode Command sent by the AMF to the UE, and sends the NAS Security Mode Complete message sent by the UE to the AMF.

Step 205: The AMF interacts with the UDM to obtain the subscription data of the UE.

The AMF may obtain relevant service information based on the subscription data of the UE. For example, the service information includes at least one of the UE's service level, service traffic limit, service fee, and the like. This information may be used to control the UE's service access and limitations, as well as charging and settlement, and the like.

Step 206: The AMF sends a NAS Registration Accept message to the RAN.

The NAS Registration Accept message may be included in an N2 message.

Step 207: The RAN forwards the NAS Registration Accept message sent by the AMF to the UE.

In a possible implementation, for example, in a dual connectivity scenario, the two paths through which the UE is connected to the network are both 3GPP access types. The UE may separately perform two 3GPP access type registrations on the two paths, thereby establishing a connection through the two 3GPP access type paths.

### 3) A process for determining the access type and the access technology type.

As described in step 201 above, when the UE performs a registration procedure, it sends an AN message to the access network device.

An access network device may be a 3GPP access network device or a non-3GPP access network device. For example, a 3GPP access network device includes a radio access network (radio access network, RAN) device. A non-3GPP access network device includes: a non-3GPP interworking function (non-3GPP interworking function, N3IWF) network element, a trusted non-3GPP gateway function (trusted non-3GPP gateway function, TNGF) network element, a trusted WLAN interworking function (trusted WLAN interworking function, TWIF) network element, or a wired access gateway function (wireline access gateway function, W-AGF) network element. The W-AGF may also be referred to as an AGF.

As described in step 203, the access network device sends the registration request message to the AMF. After the AMF receives the registration request message, the AMF may determine, based on the information about the access network device, the access type and the access technology with which the UE is registered.

In an example, the AMF determines, based on the access network device, the access type with which the UE registers. For example, if the registration request message is sent or forwarded by the 3GPP access network device (for example, a RAN), the AMF may determine that the access type with which the UE is registered is the 3GPP access type. For another example, if the registration request message is sent or forwarded by a non-3GPP access network device, for example, the registration request message is sent by an N3IWF, a TNGF, a TWIF, a W-AGF, or the like, In this case, the AMF may determine that the access type used by the UE is the non-3GPP access type.

In another example, the AMF may further determine the access technology with which the UE registers. For example, for the 3GPP access type, the AMF may further determine, based on radio access network device information, for example, global radio access network node identifiers (Global RAN Node IDs) associated with the N2 interface and a tracking area (tracking area) indicated by the radio access network device, that the access technology is LTE access technologies, NR access technologies, and satellite access technologies. For another example, when the 5G access network node has a global N3IWF node identifier (Global N3IWF Node ID), the access technology is untrusted non-3GPP. When the 5G access network node has a global TNGF node identifier (Global TNGF Node ID) or a global TWIF node identifier (Global TWIF Node ID), the access technology is a trusted non-3GPP or the like.

In a multi-connection scenario, after the UE performs multiple registrations, the UE may register with one or more access types. For example, in a dual connectivity scenario, the UE may register by using the 3GPP access type twice. In this case, the access type registered by the UE is the 3GPP access type. For another example, the UE registers by using the 3GPP access type for the first time, and registers by using the non-3GPP access type for the second time. In this case, the access types registered by the UE are the 3GPP access type and the non-3GPP access type.

### (4) a single access PDU session (single access PDU session) and a multi access PDU session (Multi Access PDU session):

In a single-access PDU session, the UE accesses the network through a user plane channel of only one access network device. (It may be a 3GPP access network device, or may be a non-3GPP access network device.) For example, the UE may send uplink data to the UPF by using a radio access network (radio access network, RAN). The UPF may send downlink data to the UE by using the RAN. However, a user plane channel of a current multi-access PDU session may include two access network devices (3GPP access network devices and non-3GPP access network devices) Two access network devices connect to the same UPF. (or connect to the same UPF through another UPF) For example, the UE may send uplink data to the UPF by using a RAN and/or a non-3GPP interworking function (non-3GPP interworking function, N3IWF). The UPF sends the downlink data to the UE by using the RAN and/or the N3IWF.

In a multi-access PDU session, whether to-be-sent data is transmitted by using a path of a 3GPP access network, a path of a non-3GPP access network, or two paths of access networks are transmitted together is determined by an offloading mode.

### 5) MA PDU session establishment procedure:

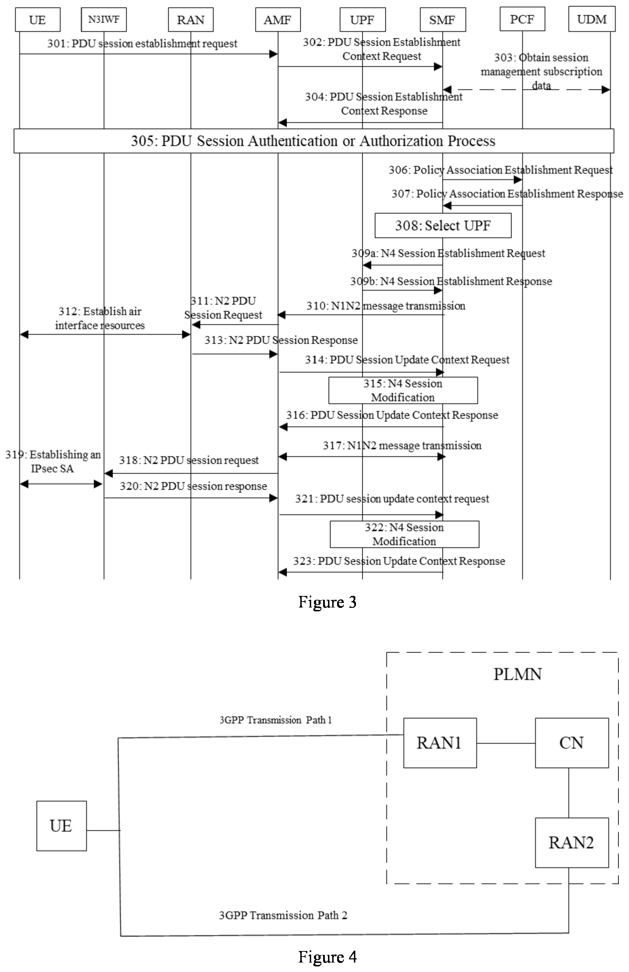

As shown in FIG. 3, FIG. 3 describes a possible MA PDU session establishment procedure in the prior art. This example is applicable to a scenario in which one path is a path of a 3GPP access type and the other path is a path of a non-3GPP access type in a multi-access PDU session established by UE.

Step 301: A UE sends a PDU session establishment request (PDU Session Establishment Request) message to an AMF.

The PDU session establishment request is a NAS message, including one or more of the following: request type (request type), PDU session ID (PDU session ID), UE requested DNN (UE requested DNN), slice information (S-NSSAI), and the like. The request type is a multi-access session request (MA PDU Request), indicating that the session establishment request message is used to request to establish a multi-access PDU session.

Step 302: The AMF sends a PDU session establishment session context request (Nsmf_PDU Session_CreateSMContext Request)) message to the SMF.

The PDU session establishment session context request includes one or more of the following: a UE identifier (for example, SUPI), a DNN requested by the UE, a PDU session identifier, a request type being a multi-access session request, an access type, a radio access technology type (radio access technology type, RAT type)), and the like. The access type is an access type used when the UE registers with the core network, for example, a 3GPP access type and a non-3GPP access type. The radio access technology type may include a radio access technology, or may include a wired access technology. The radio access technology corresponding to the 3GPP access type and the radio access technology corresponding to the non-3GPP access type have been described above.

Step 303 (optional): The SMF interacts with the UDM to obtain session management subscription data. The session management subscription data may include information indicating that a multi-access PDU session can be established or information indicating that a multi-access PDU session cannot be established. For example, the SMF may obtain the session management subscription data in a subscription retrieval/subscription for updates manner.

Step 304: The SMF sends a PDU session establishment session context response (Nsmf_PDU Session_GreateSMContext Response)) message to the AMF.

The PDU session establishment session context response includes one or more of the following: a session context identifier, a cause (cause), where the cause is used to indicate a reason why the PDU session establishment fails. For example, an unknown PDU session type (Unknown PDU Session Type) indicates that the requested PDU session type is unknown or not supported.

Step 305 (optional): Perform a PDU session authentication or authorization procedure.

Step 306: The SMF sends a policy association establishment request (SM Policy Association Establishment Request) message to the PCF.

The policy association establishment request message includes one or more of the following: a UE identifier (SUPI), a DNN requested by the UE, a PDU session identifier, a request type being a multi-access session request, and the like.

For example, if dynamic policy control and charging (policy control and charging, PCC) rules are required, the SMF selects the PCF. The SMF then sends the policy association establishment request message to the PCF, in order to establish a session policy association with the PCF.

Step 307: The PCF sends a policy association establishment response (SM Policy Association Establishment Response) message to the SMF.

The policy association establishment response message includes a PCC rule. The PCC rule includes multi-access PDU session control information, which includes but is not limited to one or more of the following: steering mode, steering functionality, threshold value, etc. The steering functionality may be a multi-path transmission control protocol (multi path transmission control protocol, MPTCP) function. The threshold value may be a round trip time (round trip time, RTT) threshold value and/or a packet loss rate threshold value.

Step 308: The SMF selects an appropriate UPF.

Step 309a: The SMF sends an N4 session establishment request (N4 Session Establishment Request) message to the UPF.

The UPF is the UPF selected by the SMF in step 308.

The N4 session establishment request includes an N4 rule, and the N4 rule includes but is not limited to one or more of the following rules: a packet detection rule (packet detection rule, PDR): including information used to classify a data packet arriving at the UPF; and; A forwarding action rule (forwarding action rule, FAR): includes information about whether to forward, discard, or cache a service flow identified by using the PDR. multi access rule (multi access rule, MAR): includes information about how to process traffic distribution, handover, or traffic distribution in an MA PDU session. usage reporting rule (usage reporting rule, URR): includes information used to define how to collect statistics on a service flow identified by using the PDR and how to report measurement. a quality of service enforcement rule (qoS enforcement rule, QER), including information related to performing QoS for a service flow identified by using a PDR; A session reporting rule (session reporting rule, SRR) contains information about an event that requests detection and reporting by a user plane function. The event is not related to a specific PDR in a PDU session, nor is it related to usage measurement. The MAR rule includes but is not limited to one or more of the following: information such as an offloading mode and an offloading function.

Step 309b: The UPF sends an N4 session establishment response (N4 Session Establishment Response) message to the SMF.

The N4 session establishment response includes tunnel information, such as tunnel information (CN tunnels info) on the core network side.

Through steps 309a and 309b, the SMF establishes an N4 connection with the UPF selected in step 308.

Step 310: The SMF sends an N1N2 message transfer (Namf_Communication_N1N2MessageTransfer) message to the AMF.

The N1N2 message transfer message includes one or more of the following items: N2 interface session management information (N2 SM information), N1 interface session management container (N1 SM Container), access type, and the like.

The session management information of the N2 interface includes but is not limited to one or more of the following items: a PDU session identifier (PDU Session ID) (which may be considered as a response to the PDU session establishment request in step 301)), tunnel information on the core network side (CN Tunnel Info) (which may be considered as one of the CN Tunnel Info in step 309b)), and the like. The SMF sends the tunnel information on the core network side to the RAN through the AMF, so that the RAN determines a destination address of uplink data.

The session management container of the N1 interface includes but is not limited to one or more of the following items: a PDU session establishment accept (PDU Session Establishment Accept) message (which may be considered as a response to the PDU session establishment request in step 301)), control of access traffic, handover, and traffic steering (access traffic steering switching splitting, ATSSS) rules (rule)), and the like, which are session-related information. The ATSSS rule includes but is not limited to one or more of the following items: information such as a steering mode, a steering function, and a threshold value. Subsequently, the information in the session management container of the N1 interface is sent by the SMF to the UE through the AMF. For example, the AMF sends the information to the UE through a NAS message.

The access type indicates to the AMF which access type path the message is transmitted through (for example, whether it is transmitted through a 3GPP access or a non-3GPP access). This allows the AMF to send the N1N2 message to the access network device corresponding to the access type path.

The AMF device may also send a response to the SMF device, indicating that information from the SMF device has been received.

Step 311: The AMF sends an N2 PDU session request message to the RAN.

The AMF sends session management information over the N2 interface (from step 310)) and a NAS message (the NAS message needs to be sent to the UE)) to the RAN. The NAS message includes a PDU session identifier (PDU Session ID) (from the session management information over the N2 interface in step 310)) and a session management container over the N1 interface (from step 310).

The AMF may determine, based on the access type indicated by the SMF, whether to send the information to a 3GPP access network device or to a non-3GPP access network device. For example, when the access type in step 310 is a 3GPP access type, the AMF sends the information to the RAN.

Step 312: The RAN establishes an air interface resource with the UE, and the access network performs specific resource configuration (AN-specific resource setup) to establish a data radio bearer (data radio bearer, DRB).

The RAN sends the NAS message to the UE. The NAS message includes but is not limited to one or more of the following items: a PDU session identifier (PDU Session ID), a PDU session establishment accept (PDU Session Establishment Accept) message, and an ATSSS rule (rule). The ATSSS rule includes, for example, information such as a traffic steering mode, a traffic steering function, and a threshold value.

Step 313: The RAN sends an N2 PDU session response message to the AMF.

The N2 PDU session response message includes access network tunnel information (AN tunnels info) on the RAN side. The tunnel information on the RAN side is used to notify the UPF of the destination of downlink data (which may be understood as the destination address of the downlink data through a 3GPP transmission path)). The AN tunnels info on the RAN side subsequently passes through the AMF and the SMF to be sent to the UPF. For details, refer to steps 313, 314, and 315.

Step 314: The AMF sends a PDU session update session context request (Nsmf_PDU Session_UpdateSMContext Request)) message to the SMF.

The PDU session update session context request message includes the access network tunnel information (AN tunnels info) on the RAN side (from step 313).

Step 315: The SMF sends the access network tunnel information (AN tunnels info) on the RAN side to the UPF through an N4 session modification (N4 Session Modification)) procedure.

Step 316: The SMF sends a PDU session update session context response (Nsmf_PDU Session_UpdateSMContext Response)) message to the AMF.

The PDU session update session context response message includes indication information for whether the update was successful or failed. If the update fails, the SMF may also send a failure cause value to the AMF.

Step 317: The SMF sends an N1N2 message transfer (Namf_Communication_ N1N2MessageTransfer)) message to the AMF.

The N1N2 message transfer message includes one or more of the following items: N2 interface session management information (N2 SM information), N1 interface session management container (N1 SM Container), access type, and the like.

The N2 interface session management information includes but is not limited to one or more of the following items: PDU session identifier (PDU Session ID) (from the PDU Session ID reported by the UE in step 301)), core network-side tunnel endpoint information (CN Tunnel Info). The SMF sends the core network-side tunnel information to the N3IWF through the AMF, for the N3IWF to determine the destination address of the uplink data.

The AMF may further send a response to the SMF, to indicate that the information from the SMF has been received.

Step 318: The AMF sends an N2 PDU session request message to the N3IWF.

The request message carries the N2 SM information (from step 317). The AMF may determine, based on the access type indicated by the SMF, whether the information is sent to the 3GPP access network device or to the non-3GPP access network device. For example, when the access type in step 317 is a non-3GPP access type, the information is sent to the non-3GPP access gateway device (for example, the N3IWF).

Step 319: The N3IWF establishes, with the UE, an Internet Protocol Security Sub-Security Association (Internet Protocol Security (IPsec) Child Security Association, IPSec Child SA) used to transmit user plane data.

In this process, the N3IWF allocates an IP address (for example, UP_IP_Address) of the IPSec Child SA to the UE. To be specific, when the UE sends uplink data, the destination IP address should be set to the UP_IP_Address. The source IP address is an allocated internal IP address, which is used to identify the identity of the UE on the network. The number of IPSec Child SAs established between the UE and the N3IWF and the quality of service flows (QoS Flows) transmitted by each IPSec Child SA are determined based on policies and configurations of the N3IWF.

Step 320: The N3IWF sends an N2 PDU session response message to the AMF.

The N2 PDU session response message includes access network tunnel information (AN tunnels info) on the N3IWF side. This access network tunnel information on the N3IWF side is used to notify the UPF of the destination of downlink data (which can be understood as the destination address of downlink data through a non-3GPP transmission path)). The access network tunnel information on the N3IWF side will subsequently be sent to the UPF via the AMF and SMF. For reference, see steps 320, 321, and 322.

Step 321: The AMF sends a PDU session update session context request (Nsmf_PDU Session_UpdateSMContext Request)) message to the SMF.

The PDU session update session context request includes access network tunnel information (AN tunnels info) on the N3IWF side (from step 320).

Step 322: The SMF sends AN tunnel information on the N3IWF side to the UPF through an N4 session modification (N4 Session Modification) procedure.

The N4 session modification includes AN tunnel information (AN tunnels info) on the N3IWF side.

Step 323: The SMF sends a PDU session update SM context response (Nsmf_PDU Session_UpdateSMContext Response)) message to the AMF.

The response message includes indication information for whether the update is successful or fails. If the update fails, the SMF may further send a failure cause value to the AMF.

Figure 3 describes a process in which a session establishment procedure is first performed on a 3GPP access side (for example, refer to steps 310 to 316 in Figure 3), and then a session establishment procedure is performed on a non-3GPP access side (for example, refer to steps 317 to 323 in Figure 3). In another example, the session establishment procedure may also be first performed on a non-3GPP access side, and then performed on a 3GPP access side. This process is similar to the foregoing schematic diagram, and details are not described again.

FIG. 3 is an example in which the UE sends a session establishment request message once. In another example, the UE may separately send the session establishment request message on the 3GPP side and the non-3GPP side. For example, between step 316 and step 317, a process similar to step 301 and step 302 may be further performed. Details are not described again.

### 6) Policy and charging control rule (PCC rule)

The PCC rule is generated by a policy control function (policy control function, PCF), and mainly involves some policy information and charging information (Charging information). For example, in step 307 in FIG. 3, after generating the PCC rule, the PCF sends the PCC rule to the SMF. The SMF may further generate another rule based on the information in the PCC rule. For example, the SMF may generate an ATSSS rule (described later) and an N4 rule (described later) based on information in the PCC rule, and send the ATSSS rule and the N4 rule to the UE in step 310 to step 312 in FIG. 3 and send the ATSSS rule and the N4 rule to the UPF in step 309a in FIG. 3 respectively. The PCC rule may include multi-access PDU (MA PDU) session control information, where the information allows the PCF to control one or more of the following: an offloading mode, an offloading function, an offloading mode indication, a threshold, charging information, and usage monitoring information.

The traffic steering modes include but are not limited to: Active Standby mode, Smallest Delay mode, Load-Balancing mode, and Priority-based mode. The mechanisms of each traffic steering mode are described below:
Active Standby: When there are two transmission paths, one of the transmission paths is designated as Active (3GPP access or Non-3GPP access)), and the other transmission path is designated as Standby. When the Active transmission path is available, all data of the service flow is transmitted to the peer end through the Active transmission path. When the Active path is unavailable, all data of the service flow is switched to the Standby transmission path for transmission.

Smallest Delay: The transmission path with the smallest delay is selected to transmit the data of the service flow. In this mode, the UE or UPF needs to monitor the transmission delay of the path in real time. This can be achieved by the transport layer protocol (e.g., MPTCP), which has the capability to detect the round-trip time (RTT). Alternatively, it can be accomplished by the performance measurement function module (performance measurement function, PMF)) within the UPF.

Load-Balancing: The data of the service flow will be proportionally distributed to different transmission paths for transmission. The distribution ratio is determined based on the load conditions of multiple (two or even more) transmission paths in the network. For example, a path with a heavier load will have a smaller distribution ratio, while a path with a lighter load will have a larger distribution ratio.

Priority-based: One of the transmission paths is designated as a high-priority transmission path, while the other transmission paths are designated as medium-priority (or low-priority, etc.) transmission paths. When the high-priority transmission path is not congested, all the data of the service flow will be transmitted through the high-priority transmission path. When the high-priority transmission path becomes congested, some of the data of the service flow will be transmitted through the medium-priority (or low-priority, etc.) transmission path, or through any one or more of the remaining transmission paths. When the high-priority transmission path becomes unavailable, all the data of the service flow will be transmitted through the medium-priority (or low-priority, etc.) transmission path, or through any one or more of the remaining transmission paths.

The offloading function can be understood as selecting which function to use for multi-path offloading. For example, the MPTCP function defined by 3GPP.

For the case where the offloading mode is load-balancing, the steering mode indicator can be autonomous load-balance or UE-assistance. Autonomous load-balance means that the UE or UPF can autonomously decide the offloading ratio. UE-assistance means that the UE can autonomously decide the offloading ratio, and in addition, the offloading ratio can be sent to the UPF, so that the UPF can send downlink data according to the offloading ratio.

The threshold value includes, but is not limited to, an RTT threshold value and/or a packet loss rate threshold value. It can be used in combination with the load-balancing or priority-based offloading modes, to assist in decision-making on how to offload.

Billing information: In a mobile communication network, communication service providers need to charge users based on their communication behaviors. The billing information in the MA PDU can record the user's communication behaviors, such as call duration, number of SMS messages, data traffic, etc., so that the communication service provider can perform billing. The communication service provider can also charge based on the path of the service flow transmission.

Usage monitoring information (Usage Monitoring information): In a mobile communication network, resources are limited. Communication service providers need to allocate and manage resources reasonably. The usage monitoring information in the MA PDU can record the user's communication behaviors, such as data traffic, bandwidth usage, etc., so that the communication service provider can perform resource management and optimization. This depends on the type of access path through which the service flow is transmitted.

In addition, the MA PDU session control information may also include application descriptors, which are used to identify the service flow, thereby determining which traffic steering function and traffic steering mode should be applied to the service flow.

### 7) ATSSS Rule

The SMF generates an ATSSS rule based on the PCC rule and sends the ATSSS rule to the UE through the AMF. The ATSSS rule may include one or more of the following items:
Rule identifier, used to uniquely identify the ATSSS rule.
Rule Precedence, used to determine the order of the ATSSS rules.

Traffic Descriptor, used to define a traffic flow. It may include one or more of the following information: Application descriptor, IP descriptor, Non-IP descriptor. Among them, the Application descriptor includes one or more application identifiers, used to identify the application that generates the traffic flow. The IP descriptor includes one or more quintuples, used to identify the destination of the IP traffic flow. The Non-IP descriptor includes one or more descriptors, used to identify the destination of non-IP traffic flows, such as Ethernet data packets.

The Access Selection Descriptor is used to define a part of the access selection. It may include the following information: offload mode, offload mode indicator, threshold value, and offload function. For the above information, refer to the relevant descriptions in the PCC rules.

### 8) System architecture for multi-access PDU sessions:

Currently, multi-access PDU sessions support transmission through two paths. These two paths are the 3GPP path and the non-3GPP path.

However, in the future, multi-access PDU sessions will support transmission through multiple paths with an access type of 3GPP and/or multiple paths with an access type of non-3GPP. In this case, the access type (e.g., 3GPP access type, non-3GPP access type) alone is no longer sufficient to accurately identify different paths. For example, if two paths are both 3GPP access paths, the AMF cannot accurately determine which 3GPP access network device to send information to, based solely on the access type (e.g., 3GPP access type).

Figure 4 illustrates a possible form of a UE accessing a network and/or establishing a multi-access session: The UE accesses the PLMN through a 3GPP transmission path 1 (e.g., cellular network 1 (RAN1))) and the core network. That is, the UE accesses the PLMN through a 3GPP access type. Additionally, the UE accesses the PLMN through a 3GPP transmission path 2 (e.g., cellular network 2 (RAN2))) and the core network. Therefore, from the perspective of the core network, the UE accesses the PLMN through two 3GPP transmission paths. If the UE establishes a multi-access session through these two paths, then this multi-access session is a session of two 3GPP access types. It should be noted that, in addition to accessing the PLMN, the UE may also access a non-public network (non-public network, NPN), such as a public network integrated with a non-public network (public network integrated non-public network, PNI-NPN)).

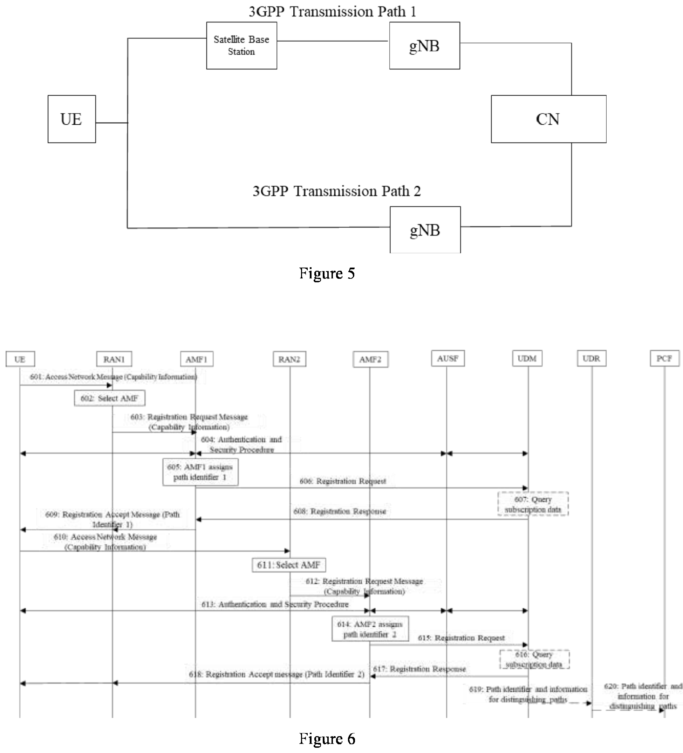

Figure 5 introduces another possible form of UE accessing the network and/or establishing a multi-access session: the UE accesses the core network through a 3GPP transmission path 1 (e.g., a satellite base station) via a gNB, and the UE also accesses the core network through a 3GPP transmission path 2 (e.g., a terrestrial cellular network (gNB))) to access the core network. From the perspective of the core network, the UE accesses the PLMN through two 3GPP transmission paths. If the core network (e.g., AMF) can distinguish between satellite access technology and terrestrial cellular access technology, then the AMF can distinguish between the two paths based on the access technology. However, from the current perspective of registration management, mobility management, and session management, both paths are considered to be of the 3GPP access type.

Based on the possible new forms of UE accessing the network and/or establishing a multi-access session as described above, that is, the various paths through which the UE accesses the network and/or establishes a multi-access session can be multiple paths belonging to the same access type (for example, multiple 3GPP access types or multiple non-3GPP access types), or they can be multi-access sessions with more than two paths.

### 9) Dual Connectivity Scenario:

Taking FIG. 4 as an example, this embodiment of this application describes a dual connectivity scenario used in this embodiment. For example, dual connectivity may be referred to as Dual steer. In this scenario, the UE simultaneously accesses the same network through two connections of a 3GPP access type. The two 3GPP access network devices corresponding to the 3GPP access type may be a RAN. For example, the UE may use one SIM card to simultaneously access the same PLMN through two different RANs. For example, the two connections of the 3GPP access type correspond to two paths. As shown in FIG. 4, the first path is that the UE connects to the core network through the RAN1. The second path is that the UE connects to the core network through the RAN2 and the AMF.

It should be noted that, simultaneously accessing the same network through two connections of a 3GPP access type does not mean that the UE must simultaneously send or receive data through two paths. Instead, it means that the UE can either access the network and send or receive data through the first path, or access the network and send or receive data through the second path.

It should be noted that in this application, the name of dual connectivity or multi-connectivity may be further extended as follows:
1: Dual/multiple radio capability (dual/multiple radio capability), where the dual/multiple radio capability indicates that the UE supports accessing a network through dual/multiple radio access.
2: Dual/multiple 3GPP access technologies (dual/multiple 3GPP RAT), where the dual/multiple 3GPP access technologies indicate that the UE accesses a network through dual/multiple 3GPP access technologies.
3: Dual/multiple steering (dual/multiple steer), where the dual/multiple steering indicates that the UE accesses a network through a path of dual/multiple steering.
4: Dual/multiple 3GPP access (dual/multiple 3GPP access), where the dual/multiple 3GPP access indicates that the UE accesses a network through a path of dual/multiple 3GPP access.
5: Dual/Multiple 3GPP access type, where the dual/multiple 3GPP access type indicates that the UE accesses the network through a dual/multiple 3GPP access type.
6: Dual/Multiple connectivity, where the dual/multiple connectivity indicates that the UE accesses the network through a dual/multiple different paths.
7: Dual/Multiple registration, where the dual/multiple registration indicates that the UE registers with the network through a dual/multiple different paths.
8: Same access type, where the same access type indicates that the UE accesses the network through a dual/multiple same access type paths.
9: Same RAT, where the same RAT indicates that the UE accesses the network through a dual/multiple same RAT paths.
10: Same access network. "Same access network" indicates that the UE accesses the same network through dual/multiple paths.
11: Dual/multiple registration within the same access type. "Dual/multiple registration within the same access type" indicates that the UE registers with the network through dual/multiple paths of the same access type.
12: Dual/multiple air interface capability. "Dual/multiple air interface capability" indicates that the UE supports the capability of accessing the network through dual/multiple air interfaces.

In this embodiment, an example in which the UE supports a dual radio capability (dual Radio Capability)) is used for description. It should be noted that the foregoing other names of the extension are also applicable. In other words, the foregoing names of the extension can be replaced with each other.

However, in the dual connectivity scenario, when the UE accesses the network through two 3GPP access types, the access network devices in the two paths are all access network devices of the 3GPP access type. As a result, the UE cannot distinguish which path the data is transmitted on through the same access type. Consequently, the UE, based on the 3GPP access type, arbitrarily selects at least one path from the two paths to transmit data, leading to reduced transmission efficiency.

To address the aforementioned issues, this application proposes the following method, enabling the UE and the network to accurately identify different transmission paths with the same access type, thereby achieving multi-connectivity management or multi-path management.

As shown in FIG. 6, a method 600 applicable to this application is described. The method is applicable to a scenario in which the UE accesses the network through multiple paths (for example, two paths of a 3GPP access type) with the same access type. In the method 600, in a registration procedure, the AMF allocates a path identifier to the UE and sends the path identifier to the UE. By using the method 600, the UE can determine a transmission path based on the path identifier. The method includes the following steps:
Step 601: A UE sends an access network (access network, AN) message to a RAN1.

In a possible implementation, the AN message includes capability information, and the capability information indicates a connection capability supported by the UE, for example, supporting multi-connection or dual-connection. The dual connectivity/multi-connection capability represents that the UE can simultaneously establish connections to two or more RANs or transmit data. Alternatively, the dual connectivity/multiconnection capability represents that the UE has two or more user plane protocol stacks, and can perform data dual-feeding, dual-receiving, dual-feeding, dual-receiving, or multiple-feeding, multiple-receiving, and multiple-receiving. Data transmitted and received at the same time may be forwarded to a core network user plane device (for example, a UPF) by using different RANs. Optionally, the user plane device may receive data from multiple access network devices, aggregate data, and send aggregated data to a data network (or a server), for example, the DN 140 in FIG. 1. In a possible implementation, the capability information indicates that the UE supports simultaneous establishment of connections or data transmission with two or more RANs. Alternatively, the capability information indicates that the UE supports two or more user plane protocol stacks, and can simultaneously perform data dual-sending, dual-receiving, or multiple-sending, multiple-receiving. A name of the capability information is not limited in this application, and may be dual connectivity support or multi-connection support, or may be an extension of the foregoing dual connectivity or multi-connection name. In this embodiment, an example in which the UE capability information indicates that the UE supports dual connectivity is used for description.

In a possible implementation, the capability information is a field that can be parsed by the AMF in the AN message. In this way, the AMF can obtain the capability information, and allocate a path identifier based on the capability information. For example, the registration request message in the AN message includes the capability information. For another example, the capability information may exist in the AN message in parallel with the AN parameter and the registration request message.

In an optional implementation, the capability information is a field that can be parsed by the RAN in the AN message. In this way, the RAN can obtain the capability information, and select an AMF based on the capability information. For example, the AN parameter in the AN message includes the capability information. For another example, the capability information may exist in the AN message in parallel with the AN parameter and the registration request message.

In a possible implementation, when the UE determines that the UE has a dual connectivity capability, or the UE expects to access the network simultaneously through two different paths of a 3GPP access type, the AN message sent in step 601 includes the capability information.

In an optional implementation, the UE determines, based on the dual connectivity information (for example, information about DualSteer)), that the UE can access the network through two paths, or that the UE expects to access the network simultaneously through two different paths. For example, the dual connectivity information may be obtained by the UE based on a service. For example, one path cannot meet a requirement of a certain service (for example, a video service)) on a rate. Therefore, the UE may determine, based on the service, that the UE needs to use two paths to access the network, and then perform step 601.

In a possible implementation, the UE may obtain the dual connectivity information (for example, information about DualSteer) based on an operation instruction of the user. For example, the user may turn on a DualSteer switch on the UE. Further, the UE may enter a DualSteer state based on the operation instruction of the user, and then perform step 601.

In another possible implementation, the UE may obtain the information about supporting dual connectivity (for example, information about DualSteer) based on preconfigured information. For example, the factory configuration of the UE may preconfigure information about the UE supporting DualSteer. For example, the UE supports simultaneous network access through two different paths, and then performs step 601.

In this embodiment, the UE selects the RAN1 as the first path to initiate a registration procedure, and sends an AN message to the RAN1 as an example for description. In another possible implementation, for a related description of the AN message, refer to step 201 in FIG. 2. That is, the AN message may not include the capability information.

Step 602: RAN1 selects an AMF.

In a possible implementation, the capability information is in a field that can be parsed by the RAN in the AN message. RAN1 selects, based on the capability information, an AMF that supports dual connectivity. In other words, an AMF that supports managing "a UE supporting dual connectivity" is selected. This can be understood as the AMF can reserve two path connections for the same UE. Alternatively, it can be understood as the AMF can simultaneously maintain a connection with the UE through two paths. It can also be understood as the AMF can identify newly added parameters, such as the capability information of the UE. Here, "a UE supporting dual connectivity" can be understood as a UE that can access the network through the same access type. For example, the UE can access the same AMF or different AMFs through two 3GPP paths corresponding to two different RANs. When accessing the same AMF, the AMF can simultaneously maintain the connection status/context information of the UE corresponding to the two 3GPP paths. Alternatively, it can be understood as the AMF supports dual registration, and the AMF supports multi-registration, which is also applicable in this embodiment. It should be noted that the name of the dual registration or multi-registration can be further extended as follows:
1: Supports dual/multi-registration management. Supports dual/multi-registration management indication. The AMF supports managing UEs that register with the network through dual/multi paths of the same registration type.
2: Supports dual/multi-registration under the same access type. Supports dual/multi-registration under the same access type indication. The AMF supports managing UEs that register with the network through dual/multi paths of the same access type.
3: Supports dual/multi-registration under the same access technology. Supports dual/multi-registration under the same access technology indication. The AMF supports managing UEs that register with the network through dual/multi paths of the same access technology.
4: Supports dual/multi-connection management. Supports dual/multi-connection management indication. The AMF supports managing UEs that connect to the network through dual/multi paths.
5: Supports dual/multi-connection under the same access type. Supports dual/multi-connection under the same access type indication. The AMF supports managing UEs that connect to the network through dual/multi paths of the same access type.
6: Supports dual/multi-connections under the same access technology, and supports dual/multi-connection indication. The AMF is capable of managing UEs that connect to the network through dual/multi paths of the same access technology.

In this embodiment, an example in which RAN1 selects AMF1 is used for description.

Step 603: RAN1 sends a registration request message to AMF1.

The registration request message includes capability information, which is used by AMF1 to allocate a path identifier.

Optionally, RAN1 sends, to AMF1, information used to distinguish paths. In a possible implementation, the information used to distinguish paths is one or more of location information, an access type, an access technology type, a registration type, and a RAN identifier. For example, the location information is user location information (user location information, ULI). The ULI includes a cell identifier, and the cell identifier is an identifier of a cell accessed by the UE in RAN1. Because the cells accessed by the UE through different paths are different, the ULI may be used to identify different paths.

In a possible implementation, the RAN1 may send a next generation application protocol (next generation application protocol, NGAP) message to the AMF1. This message may also be referred to as an N2 message. The N2 message includes a registration request message and information used to distinguish paths. It may be understood that, in the N2 message, the registration request message and the information used to distinguish paths exist side by side.

In another possible implementation, the RAN1 may send a registration request message and information used to distinguish paths to the AMF1 by using two N2 messages.

In another possible implementation, the RAN1 may send a registration request message to the AMF1 by using one N2 message. The registration request message includes UE capability information and information used to distinguish paths.

Step 604 (optional): The AMF1 triggers an authentication and security procedure between the AMF1, the UE, the AUSF, and the UDM.

For related description, refer to related description in step 204 in FIG. 2. Details are not described herein again.

Step 605: The AMF1 allocates a path identifier (for example, a path identifier).

In a possible implementation, the AMF 1 allocates a path identifier based on the capability information of the UE indicating that the UE supports the dual connectivity.

In a possible implementation, when AMFs on different paths are different, to ensure that different AMFs allocate different path identifiers to a same UE, the AMF may allocate the path identifier in the following two manners:
Manner a: The path identifier includes the identifier of the AMF. For example, the identifier of the AMF is the AMF 1, and the AMF 1 allocates a path identifier 1 to the first path. In this case, the path identifiers of the first path may include the AMF 1 and 1. An identifier of the other AMF is the AMF 2, and the AMF 2 allocates a path identifier 1 to the second path. In this case, the path identifier of the second path may include the AMF 2 and 1. Therefore, it is ensured that path identifiers allocated by the AMF 1 and the AMF 2 are different.
Method b: Select a path identifier from an identifier set. The network allocates different identifier sets to different AMFs. For example, the set allocated by the network to the AMF1 is 1-32. Therefore, the path identifier allocated by the AMF1 to the first path is selected from the set 1-32, for example, the path identifier 1 is selected. The set allocated by the network to the AMF2 is 33-64. Therefore, the path identifier allocated by the AMF2 to the second path is selected from the set 33-64, for example, the path identifier 33 is selected. In this way, it is ensured that the path identifiers allocated by the AMF1 and the AMF2 are different.

In another possible implementation, when AMFs on different paths are the same, the AMF allocates different path identifiers to the same UE on different paths.

In this embodiment, an example in which the AMF1 allocates the path identifier 1 to the first path is used for description.

One possible implementation is as follows: AMF1 obtains information used to distinguish paths, such as location information, an access type, an access technology type, a registration type, and a RAN identifier. The AMF1 may determine the access type, the access technology type, and the RAN identifier based on the information about the access network device. The AMF1 may obtain the location information and the registration type based on a message sent by the RAN1. For example, the RAN1 sends an N2 message to the AMF1, where the N2 message includes location information and a registration request message, and the registration request message includes a registration type. It should be noted that, the information used to distinguish paths is information used to distinguish the first path or information used to identify the first path.

In a possible implementation, the AMF1 stores the path identifier in the UE context. Alternatively, the AMF1 stores the path identifier 1 and the information used to distinguish the first path (for example, one or more of location information, an access type, an access technology type, a registration type, or an identifier of the AMF serving the UE)) in the UE context. Alternatively, the AMF1 stores an association relationship between the path identifier 1 and the information used to distinguish the first path in the UE context. In this way, subsequently, after receiving downlink data, the AMF1 may determine the first path based on the path identifier 1, and send the data to the UE by using the first path.

Step 606: AMF1 sends a registration request to UDM.

The registration request is used by the AMF1 to register with the UDM as an AMF serving the UE. For example, the registration request is an Nudm_UECM_Registration request.

Optionally, the registration request includes the path identifier 1 and the information used to distinguish the first path (for example, one or more of location information, an access type, an access technology type, a registration type, or an identifier of the AMF serving the UE)). The path identifier 1 is used to subsequently notify the SMF that the path identifier corresponding to the information used to distinguish the first path is 1.

Optionally, the registration request includes capability information, and the capability information indicates that the UE supports dual connectivity.

In a possible implementation, the AMF 1 may select, based on the capability information or the registration type, a UDM that supports dual registration. For example, the registration type is a newly added registration type, and the registration type is used to indicate that the UE registers two paths. For example, the name of the newly added registration type may be DualSteer Registration. A name herein is not limited. It may be understood that the UDM selected by the AMF is a UDM that supports storage of a plurality of contexts of a same UE.

Step 607: The UDM queries subscription data.

Optionally, the UDM may query subscription data of the UE based on an identifier of the UE. The subscription data of the UE includes capability information of the UE, so as to determine whether the UE is allowed to access the network through dual connectivity. For example, when the subscription data of the UE is that the UE is allowed to access the network through dual connectivity, the information used to distinguish the first path and the path identifier 1 are stored. When the subscription data of the UE is that the UE is not allowed to access the network through dual connectivity, the information used to distinguish the first path and the path identifier 1 are not stored.

In a possible implementation, the UDM may store the information used to distinguish the first path and the path identifier 1, or the correspondence between the information used to distinguish the first path and the path identifier 1, in the subscription data or context information corresponding to the UE.

Step 608: The UDM sends a registration response to the AMF 1.

For example, the registration response is Nudm_UECM_Registration Response.

In a possible implementation, the UDM sends the UE capability information to the AMF 1, where the capability information indicates that the UE supports dual connectivity. The AMF 1 allocates a path identifier based on the UE capability information. That is, step 605 may be performed after step 608.

Step 609: The AMF1 sends a registration accept (Registration Accept) message to the UE through the RAN1.

The registration accept message includes the path identifier 1, and the path identifier 1 is used by the UE to determine/identify/mark the first path.

In a possible implementation, the UE stores the path identifier 1. For example, the UE associates/maps the path identifier 1 to one or more of an access technology type, a RAN identifier, an access type, or a used protocol stack, an interface, or a link corresponding to the current path. That is, the UE may associate/map the path identifier 1 with the currently connected RAN 1. For example, the UE may associate/map the path identifier 1 with the currently connected RAN 1 by using circuit logic, line logic, protocol stack logic, or the like. Subsequently, the UE may determine, based on the path identifier 1 and the association/mapping relationship, the first path corresponding to the RAN1.

Step 610: The UE sends an AN message to the RAN2.

The AN message includes the capability information. For related description of the capability information, refer to step 601 in FIG. 6. Details are not described herein again.

It should be noted that when the UE determines that it hopes to access the network simultaneously through two different paths, step 610 is performed. For example, before the UE sends an AN message to the RAN2, the UE determines that it can access the network through two paths, and the UE determines that it has already accessed the network through the first path. For example, the UE may determine, based on the dual connectivity information, that it can access the network through two paths. For a related description of dual connectivity, refer to step 601 in FIG. 6.

This embodiment uses an example in which the UE selects the RAN2 as the second path to initiate a registration procedure, and sends an AN message to the RAN2, for description.

Step 611: RAN2 selects an AMF.

For the related description of selecting an AMF, refer to step 602. This will not be further described here.

It should be noted that the AMF selected by RAN2 can be AMF1, or can be AMF2 that is different from AMF1.

In this embodiment, an example in which the RAN2 selects the AMF2 is used for description.

Step 612: The RAN2 sends a registration request message to the AMF2.

For related descriptions, refer to step 603. Details are not described herein again.

Step 613: The AMF2 triggers an authentication and security procedure (authentication and security procedure) with the UE, the AUSF, and the UDM.

For related descriptions, refer to the related descriptions in step 204 in Figure 2. Details are not described herein again.

Step 614: AMF2 allocates a path identifier (for example, a path identifier).

For related descriptions, refer to the relevant descriptions in step 606, which will not be repeated here.

In this embodiment, an example in which AMF2 allocates a path identifier 2 to the second path is used for description.

Step 615: AMF 2 sends a registration request to a UDM.

For related descriptions, refer to the relevant descriptions in step 606, which will not be repeated here.

Step 616: The UDM queries subscription data.

For related descriptions, refer to the relevant explanations in step 607, which will not be repeated here.

Step 617: The UDM sends a registration response to the AMF 2.

Step 618: The AMF 2 sends a registration accept (Registration Accept) message to the UE through the RAN 2.

The registration accept message includes a path identifier 2, which is used by the UE to determine/identify/label the second path.

In a possible implementation, the UE stores the path identifier 2. For example, the UE associates/maps the path identifier 2 with one or more of the following: an access technology type corresponding to the current path, a RAN identifier, an access type, or a used protocol stack, interface, or link. That is, the UE may associate/map the path identifier 2 with the currently connected RAN2. For example, the UE may associate/map the path identifier 2 with the currently connected RAN2 in a manner such as circuit logic, line logic, or protocol stack logic. Subsequently, the UE may determine the second path corresponding to the RAN2 based on the path identifier 2 and the association/map relationship.

Step 619 (optional): The UDM sends a path identifier and information used to distinguish paths to the UDR.

For example, the UDM may send the path identifier and the information used to distinguish paths to the UDR by using a manner such as circuit logic, line logic, or protocol stack logic. Subsequently, the UE may determine the second path corresponding to the RAN2 based on the path identifier 2 and the association/map relationship.

In a possible implementation, the UDM may send one or more path identifiers and information used to distinguish paths to the UDR. For example, the information used to distinguish paths is an identifier of an AMF, that is, the information used to distinguish the first path is an identifier of AMF1, and the information used to distinguish the second path is an identifier of AMF2. The UDM may send the identifier of AMF1 and the path identifier 1 and/or the identifier of AMF2 and the path identifier 2 to the UDR. In a subsequent session establishment procedure, the PCF may obtain the path identifier and the information used to distinguish the path from the UDR.

In another possible implementation, the UDM may send the identification information of the UE, and the path identifier corresponding to the UE and the information used to distinguish the path to the UDR.

It should be noted that, in this application, an execution sequence of step 619 is not limited. For example, step 619 may be performed after step 616. Alternatively, the UDM may send, to the UDR, the information used to distinguish the first path based on the first path identifier and the information used to distinguish the first path. The information may be sent after step 607.

Step 620 (optional): The UDR sends the path identifier and the information used to distinguish the paths to the PCF.

In a possible implementation, the PCF generates a routing rule (for example, URSP) based on the path identifier and the information used to distinguish the paths. The routing rule includes the path identifier. The information used to distinguish the paths may be used to determine a path priority. Subsequently, the routing rule is sent to the UE, and the UE may select, based on the routing rule, a path corresponding to the path identifier from multiple paths under a same access type to transmit a service. When the routing rule is a URSP, it may be understood that an enhanced URSP (enhanced URSP)) is generated herein.

In another possible implementation, the PCF receives, from the AMF1, the path identifier 1 and the information used to distinguish the first path, and receives, from the AMF2, the path identifier 2 and the information used to distinguish the second path. It should be noted that, when the AMFs in the first path and the second path are the same, for example, both are the AMF1, the PCF may receive, from the AMF1, the path identifier 1 and the information used to distinguish the first path, and the path identifier 2 and the information used to distinguish the second path.

In a possible implementation, the PCF is an AM-PCF, and is mainly responsible for access mobility policy control.

According to the step of the method 600, when the UE accesses the network by using two paths of the 3GPP access type, the AMF allocates the path identifier, the UE receives the first path identifier from the first path, and receives the second path identifier from the second path. Therefore, both the UE and the network can distinguish two different paths according to the path identifier.

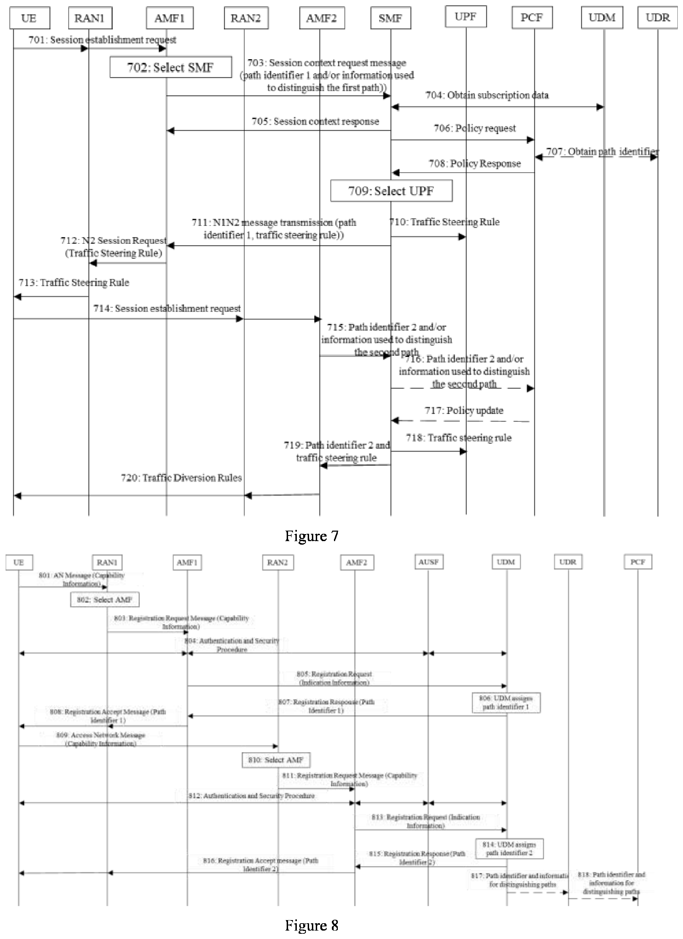

As shown in FIG. 7, with reference to FIG. 6, a method 700 applicable to this application is described. The method is applicable to a scenario where UE accesses a network by using a plurality of paths (for example, two paths of a 3GPP access type) of a same access type. The AMF first allocates a path identifier to the UE in a registration procedure and sends the path identifier to the UE. In a session establishment procedure, the SMF generates an traffic steering rule based on the path identifier, and the UE obtains the traffic steering rule. In a possible implementation, the UE performs the steps in the method 700 after the registration procedures are completed on both paths. In another possible implementation, after the first path completes registration, the UE performs steps 701 to 713 in the method 700, and after the second path completes registration, the UE performs steps 714 to 720 in the method 700. According to the method 700, the UE can determine the transmission path of the service data based on the path identifier. The method includes the following steps:
Step 701: The UE sends a session establishment request message to the AMF1 through the RAN1.

In a possible implementation, the session establishment request message is a PDU session establishment request (PDU Session Establishment Request) message. For related descriptions of the PDU session establishment request message, refer to step 301 in FIG. 3.

This embodiment uses an example in which the UE selects the RAN1 as the first path to initiate a session establishment procedure, and sends a session establishment request message to the AMF1 through the RAN1.

Step 702: The AMF selects an SMF.

In a possible implementation, AMF1 selects, based on capability information (for example, the UE supports dual connectivity)), an SMF that supports dual connectivity. The SMF that supports dual connectivity may be understood as that the SMF can identify a newly added parameter in a message, for example, a path identifier, or information used to distinguish paths. The SMF supports generating a traffic steering rule (for example, an enhanced traffic steering rule) that includes a path identifier. By using the traffic steering rule that includes the path identifier, the path identifier corresponding to the traffic steering rule can be selected from multiple paths of the same access type, to transmit a service. For related descriptions of the capability information, refer to step 601 in FIG. 6.

Step 703: The AMF 1 sends a session context request message to the SMF.

The session context request message includes the path identifier 1 and/or information used to distinguish the first path. The path identifier 1 is allocated by the AMF 1 in step 605 in FIG. 6, and the information used to distinguish the first path may be one or more of location information, an access type, an access technology type, a registration type, a RAN identifier, and an AMF identifier. The location information is, for example, a ULI, where the ULI includes a cell identity, and the cell identity is an identity of a cell in the RAN1 to which the UE accesses. Because the UE accesses different cells on different paths, the different paths may be identified by using the ULI.

In a possible implementation, the session context request message includes a path identifier 1. The SMF may obtain the path identifier 1 by using the AMF 1, so that the SMF may subsequently determine, based on the path identifier 1, to send data to the AMF 1.

In another possible implementation, the session context request message includes the path identifier 1 and information used to distinguish the first path. Information used to distinguish the first path is, for example, a RAT type. For example, a RAT type corresponding to the first path connecting the RAN 1 and the AMF 1 is 6G, and a RAT type corresponding to the second path connecting the RAN 2 and the AMF 2 is 5G. Therefore, the SMF may subsequently determine, based on the path identifier 1, to send data to the AMF 1 on the first path corresponding to 6G.

In another possible implementation, the session context request message includes information used to distinguish the first path. In this way, the SMF may obtain, from the UDM or the PCF based on the information used to distinguish the first path, the path identifier 1 corresponding to the first path.

In a possible implementation, the session context request message is a PDU session establishment session management context request (Nsmf_PDUSession_CreateSMContext Request)) message, or a PDU session update session management context request (Nsmf_PDUSession_UpdateSMContext Request)) message.

Step 704: The SMF obtains subscription data from the UDM.

The subscription data (for example, session management subscription data) may include a path identifier, or a path identifier and information used to distinguish a path. The path identifier and the information used to distinguish the path may be a path identifier 1 and information used to distinguish the first path, or a path identifier 2 and information used to distinguish the second path. The path identifier 1 and the information used to distinguish the first path are stored by the UDM in step 607 in FIG. 6. The path identifier 2 and the information used to distinguish the second path are stored by the UDM in step 616 in FIG. 6. For example, the UDM may store the foregoing path identifier and the information used to distinguish the path in the subscription data or context information corresponding to the UE.

In one possible implementation, the subscription data includes a path identifier. For example, the SMF sends, to the UDM, information used to distinguish the first path. This information is obtained by the SMF from the AMF1 in step 703. The UDM determines a corresponding path identifier based on the information used to distinguish the first path. That is, the path identifier 1 is determined, and the path identifier is sent to the SMF. For example, the information used to distinguish the first path is an AMF identifier, that is, AMF1. The SMF sends the UE's SUPI and AMF1 to the UDM. The UDM queries the subscription data or context information corresponding to the UE based on the SUPI, and sends, to the SMF, a path identifier corresponding to AMF1 based on a stored association relationship between the path identifier and the information used to distinguish the first path. For example, the SMF receives, from the AMF1, a session context request message in step 703. Therefore, the SMF can subsequently determine to send data to the AMF1 based on the path identifier 1.

In another possible implementation, the subscription data includes a path identifier and information used to distinguish paths. For example, the information used to distinguish paths is an AMF identifier, that is, the above information is that path identifier 1 corresponds to AMF1, and path identifier 2 corresponds to AMF2. The SMF receives, from the AMF1 in step 703, a session context request message. Therefore, the SMF can subsequently determine to send data to the AMF1 based on the path identifier 1.

It should be noted that, in the case where the session context request message includes the path identifier 1, the subscription data may also not include the path identifier and the information used to distinguish paths. For a related description of the subscription data, refer to step 303 in FIG. 3.

In a possible implementation, after receiving the path identifier, the SMF may store the path identifier in the context information of the UE. For example, the SMF may store, in the context information of the UE, an association relationship between the path identifier 1 and the information used to distinguish the first path.

Step 705: The SMF sends a session context response message to the AMF 1.

In a possible implementation, the session context response message is a session context response message for PDU session establishment (Nsmf_PDU Session_GreateSMContext Response) message, or a session context response message for PDU session update (Nsmf_PDUSession_ UpdateSMContext Response) message.

Step 706: The SMF sends a policy request message to the PCF.

The policy request message includes a path identifier and/or information used to distinguish paths.

In a possible implementation, when the policy request message includes the path identifier, or the path identifier and the information used to distinguish paths, the PCF may obtain the path identifier, for example, the path identifier 1.

In another possible implementation, when the policy request message includes the information used to distinguish paths, the PCF may obtain the path identifier from the UDR.

In a possible implementation, the SMF selects, based on the path identifier, a PCF that supports multi-connections, and sends a policy request message to the PCF that supports multi-connections. The PCF that supports multi-connections may be understood as that the PCF can identify a newly added parameter, such as the path identifier. The PCF supports generating a policy rule (for example, an enhanced PCC rule) that includes the path identifier. The policy rule is used to select, from multiple paths under a same access type, a path corresponding to the path identifier for transmitting a service.

In a possible implementation, the policy request message is a policy association establishment request message (SM Policy Association Establishment Request) or a policy association modification request message (SM Policy Association Modification Request) message.

Step 707 (optional): The PCF interacts with the UDR to obtain the path identifier.

It should be noted that the UDR may obtain, by using step 619 in method 600, an association relationship between the path identifier and the information used to distinguish the paths.

In a possible implementation, the PCF sends, to the UDR, the information used to distinguish the paths, the UDR determines the path identifier based on the foregoing association relationship, and sends the path identifier to the PCF. For example, the information used to distinguish the paths is, for example, an RAT type. For example, the RAT type corresponding to the first path connecting RAN1 and AMF1 is 6, and the RAT type corresponding to the second path connecting RAN2 and AMF2 is 5G. The PCF sends 6G to the UDR. The UDR may determine the path identifier 1 based on the association relationship between the 5G and the path identifier 1. Then, the UDR sends the path identifier 1 to the PCF, or the UDR sends the path identifier 1 and 6G to the PCF.

In a possible implementation, the PCF sends a query message, for example, a data management query message (Nudr_DM_Query) to the UDR, where the query message includes the information used to distinguish paths, and the data management response message (Nudr_DM_Query_Response) sent by the UDR to the PCF includes the path identifier.

Step 708: The PCF sends a policy response message to the SMF.

The policy response message includes the policy rule.

In a possible implementation, a policy rule (for example, a PCC rule) in the policy response message may include a path identifier. For example, when the policy rule is a PCC rule, it may be understood that an enhanced PCC rule (enhanced PCC rule) is generated herein. By using the policy information, the UE or the UPF may select, from a plurality of paths of a same access type, a path corresponding to the path identifier to transmit the service.

In a possible implementation, the PCF may generate the policy rule based on the path identifier and the information used to distinguish paths. The information used to distinguish paths may be used to determine a path priority. For example, MA PDU session control (MA PDU Session Control) information in the policy rule is generated, where the MA PDU session control information allows the PCF to control one or more of the following: an offloading mode, an offloading function, an offloading mode indication, a threshold, charging information, and usage monitoring information. For example, an example in which the information used to distinguish the first path and corresponding to the path identifier 1 is 6G, and the offloading mode is an active standby mode is used. It is assumed that 6G is higher than 5G and 4G, and the PCF may determine that the path is an active path based on a higher priority of 6G. The policy rule that the PCF generates according to the path identifier 1 and that includes the path identifier 1 may be represented by using Table 1.

**Table 1 Policy rule (including path identifier 1)**

| Information Name | Specific Parameters |
|---|---|
| Business Descriptor | May be one or more of the following information: application identifier, IP address, MAC address, etc. |
| Diversion Mode | Active standby: |
| | Active: Path identifier 1 |

Herein, the service descriptor is used to define a service flow. This rule indicates that: for the service flow corresponding to the service descriptor, the active standby diversion mode is adopted. In this mode, the active path is the transmission path identified by path identifier 1. That is, when the transmission path identified by path identifier 1 is available, the transmission path identified by path identifier 1 is used to transmit the above service flow.

It should be noted that when the policy rule generated by the PCF does not include a path identifier, the related description of the policy rule may refer to the PCC rule. In this embodiment, the policy rule is described with the diversion mode being active standby. The policy rule generated by the PCF and not including a path identifier may be characterized by Table 2:

**Table 2 Policy Rules (excluding path identifiers)**

| Information Name | Specific Parameters |
|---|---|
| Service Descriptor | May be one or more of the following information: application identifier, IP address, MAC address, etc. |
| Diversion Mode | Active standby |

In one possible implementation, the PCF is an SM-PCF, which is primarily responsible for session management policy control. It should be noted that the SM-PCF and AM-PCF may be different PCFs.

In one possible implementation, the policy response message is a policy association establishment response (SM Policy Association Establishment Response) message, or a policy association modification response (SM Policy Association Modification Response) message.

Step 709: The SMF selects a UPF.

In a possible implementation, the UPF selected by the SMF supports storing a plurality of contexts of a same UE. It may be understood that the UPF supports performing data (or service) offloading on a plurality of paths on which the UE is connected to the network. For example, the UPF supports performing data offloading on a path on which the UE is connected to the network by using a dual 3GPP access type. Alternatively, the UPF supports an traffic steering rule (for example, an enhanced N4 rule) that includes a path identifier, and the traffic steering rule that includes the path identifier may be used by the UPF to select, from a plurality of paths of a same access type, a path corresponding to the path identifier to transmit a service.

Step 710: The SMF sends an traffic steering rule to a UPF.

The SMF may generate, based on the policy rule, an traffic steering rule (for example, the N4 rule) used by the UPF, where the traffic steering rule includes the path identifier. For example, the multi-access rule (Multi-Access Rule, MAR) includes the path identifier. When the traffic steering rule is an N4 rule, it may be understood that an enhanced N4 rule (enhanced N4 rule) is generated herein. The traffic steering rule is used by the UPF to select, from a plurality of paths of a same access type, a path corresponding to the path identifier to transmit the downlink service data.

In a possible implementation, the policy information does not include a path identifier. The SMF may generate a traffic steering rule based on the path identifier and information used to distinguish paths. For example, here, the information used to distinguish the first path corresponding to the path identifier 1 is 6G, and the traffic steering mode is an active standby mode. For example, the SMF may determine, based on the higher priority of 6G, that the path is an active path. The SMF may generate, based on the path identifier 1, a traffic steering rule that includes the path identifier 1, and this can be represented using Table 3:

**Table 3 Traffic Steering Rule**

| Information Name | Specific Parameter |
|---|---|
| Service Descriptor | It can be one or more of the following information: application identifier, IP address, MAC address, etc. |
| Traffic Steering Mode | Active standby: |
| | Active: Path identifier 1 |

In another possible implementation, the policy rule includes a path identifier. The SMF generates a traffic steering rule that includes the path identifier based on the policy rule. The traffic steering rule may be represented using the foregoing Table 3.

In a possible implementation, the SMF sends an N4 session establishment request (N4 Session Establishment Request) message to the UPF. The message includes the traffic steering rule described above.

Step 711: The SMF sends an N1N2 message transfer (Namf_Communication_N1N2MessageTransfer) message to AMF 1.

The SMF may generate, based on a policy rule, an traffic steering rule (for example, an ATSSS rule) used by the UE. The traffic steering rule includes a path identifier. When the traffic steering rule is the ATSSS rule, it may be understood that an enhanced ATSSS rule (enhanced ATSSS rule) is generated herein. The traffic steering rule is used by the UE to select, from multiple paths with the same access type, a path corresponding to the path identifier to transmit a service. For example, the traffic steering rule may be represented by using Table 3 described above. It should be noted that the traffic steering rule used by the UPF is used for downlink data transmission, the traffic steering rule used by the UE is used for uplink data transmission, and the IP address in the service descriptor of the traffic steering rule used by the UE is different from the IP address in the service descriptor of the traffic steering rule used by the UPF. The IP address is used to identify a destination of an IP service flow. The N1N2 message transfer message includes the path identifier 1 and the traffic steering rule. The path identifier 1 is used by the AMF 1 to determine a RAN corresponding to the path identifier 1. For example, the UE is connected to the AMF 1 through the RAN 1 and the RAN 2, that is, the AMF on the first path and the second path is the same, that is, the AMF 1. The AMF 1 may determine, based on the path identifier 1, that the RAN 1 is located in the first path.

In a possible implementation, the N1 interface session management container (N1 SM Container) in the N1N2 message transmission message includes a traffic steering rule and a session establishment accept (Session Establishment Accept) message (which may be considered as a response to the session establishment request in step 701)).

Step 712: AMF1 sends an N2 session request message to RAN1.

The N2 session request message includes a traffic steering rule.

In a possible implementation, AMF1 may determine, based on the path identifier sent by the SMF, to which access network device (for example, RAN) the foregoing information is sent. For example, AMF1 determines, based on the path identifier 1, to send the N2 session request message to RANI in the first path.

In a possible implementation, the N2 session request message is an N2 PDU session request message. The N1 interface session management container in the N2 PDU session request message includes a traffic steering rule.

Step 713: RAN1 sends a traffic steering rule to the UE.

In a possible implementation, the traffic steering rule includes a path identifier 1, a service descriptor, and the like. Based on the traffic steering rule, the UE can determine which path the service data should be transmitted through. For example, the default mode is Active standby mode. The UE determines, based on the path corresponding to the path identifier 1, that the path is an Active path. When the first path corresponding to the path identifier 1 is available, the UE transmits, on the first path, a service flow corresponding to the service descriptor.

In another possible implementation, the traffic steering rule includes a path identifier 1, a traffic steering mode, a service descriptor, and the like. Based on the traffic steering rule, the UE can determine which path the service data should be transmitted through. For example, the UE determines, based on the traffic steering mode, that the traffic steering mode is Active standby mode. The UE determines, based on the path corresponding to the path identifier 1, that the path is an Active path. When the first path corresponding to the path identifier 1 is available, the UE transmits, on the first path, a service flow corresponding to the service descriptor.

For example, the UE determines the corresponding first path based on the path identifier 1. For related descriptions of the association/mapping between the path identifier and the path, refer to step 609.

In a possible implementation, in a process in which the RAN 1 establishes an air interface resource with the UE, the RAN 1 sends a traffic steering rule to the UE.

It should be noted that for subsequent steps of establishing, by the UE, a user plane channel of the first path through the RAN 1 and the AMF 1, refer to steps 313 to 318 in FIG. 3. Details are not described herein again.

Step 714: The UE sends a session establishment request message to the AMF 2 through the RAN 2.

In a possible implementation, the session establishment request message is a PDU session establishment request (PDU Session Establishment Request) message. For related descriptions of the PDU session establishment request message, refer to step 301 in FIG. 3. Details are not described herein again.

This embodiment is described by using an example in which the UE selects the RAN 2 as the second path to initiate a session establishment procedure, and sends the session establishment request message to the AMF 2 by using the RAN 2.

Step 715: The AMF 2 sends, to the SMF, the path identifier 2 and/or information used to distinguish the second path.

The path identifier 2 is allocated by the AMF 2 in step 614 in FIG. 6, and the information used to distinguish the second path may be one or more of location information, an access type, an access technology, a registration type, a RAN identifier, and an AMF identifier. The location information is, for example, a ULI. The ULI includes a cell identity, and the cell identity is an identity of a cell in the RAN1 to which the UE accesses. Because the UE accesses different cells on different paths, the different paths may be identified by using the ULI.

In a possible implementation, the AMF 2 sends the path identifier 2 to the SMF. The SMF may obtain the path identifier 2 by using the AMF 2, so that the SMF may subsequently determine, based on the path identifier 2, to send data to the AMF 2.

In another possible implementation, AMF2 sends the path identifier 2 and the information used to distinguish the second path to the SMF. The information used to distinguish the second path may be, for example, a RAT type. For example, a RAT type corresponding to the first path that connects RAN1 and AMF1 is 6G, and a RAT type corresponding to the second path that connects RAN2 and AMF2 is 5G. In this way, the SMF may subsequently determine, based on the path identifier 2, to send data to AMF2 on the second path corresponding to 5G.

In another possible implementation, AMF2 sends the information used to distinguish the second path to the SMF. In this way, the SMF may obtain, based on the information used to distinguish the second path, the path identifier 2 corresponding to the second path from the UDM or PCF.

In a possible implementation, the path identifier 2 and/or the information used to distinguish the second path are sent through a session context request or update message. For example, a PDU session creation session management context request (Nsmf_PDUSession_CreateSMContext Request)) message, or a PDU session update session management context request (Nsmf_PDUSession_UpdateSMContext Request)) message.

Step 716 (optional): The SMF sends the path identifier 2 and/or information used to distinguish the second path to the PCF.

In a possible implementation, when the SMF sends the path identifier 2 and/or the information used to distinguish the second path to the PCF, the PCF obtains the path identifier 2.

In another possible implementation, when the SMF sends the information used to distinguish the second path to the PCF, the PCF may obtain the path identifier 2 from the UDR.

In a possible implementation, the path identifier 2 and/or the information used to distinguish the second path are sent through a policy request message. For example, a policy association establishment request message (SM Policy Association Establishment Request) or a policy association modification request message (SM Policy Association Modification Request) message.

Step 717 (optional): The PCF sends a policy update message to the SMF.

In a possible implementation, the policy update message includes an updated policy rule. The policy rule (for example, a PCC rule) includes a path identifier 2.

In a possible implementation, the PCF may generate a policy rule based on the path identifier and information used to distinguish paths. The information used to distinguish paths may be used to determine a path priority. For example, the path identifier 1 corresponds to information used to distinguish the first path, which is 6G, and the path identifier 2 corresponds to information used to distinguish the second path, which is 5G. The offloading mode is an active standby mode. In this case, the PCF may determine, based on the priority of 6G being higher than that of 5G, that the first path is an active path, and the second path is a standby path. The PCF may generate, based on the path identifier, a policy rule that includes the path identifier 1 and the path identifier 2. Table 4 may be used to characterize the policy rule:

**Table 4 Policy Rules (including path identifiers 1 and 2)**

| Information Name | Specific Parameters |
|---|---|
| Business Descriptor | May be one or more of the following information: application identifier, IP address, MAC address, etc. |
| Shunt Mode | Active standby: |
| | Active: Path identifier 1 |
| | Standby: Path identifier 2 |

Among them, the service descriptor is used to define the service flow. This rule indicates: for the service flow corresponding to the service descriptor, the active standby shunt mode is adopted. Here, the active path is the transmission path identified by path identifier 1, i.e., when the transmission path identified by path identifier 1 is available, the transmission path identified by path identifier 1 is used to transmit the above service flow. The standby path is the transmission path identified by path identifier 2. That is, when the transmission path identified by path identifier 1 is unavailable, and the transmission path identified by path identifier 2 is available, the transmission path identified by path identifier 2 is used to transmit the above service flow.

Step 718: The SMF sends a traffic steering rule to the UPF.

The SMF can generate a traffic steering rule (for example, an N4 rule) used by the UPF. The traffic steering rule includes the path identifier 2.

In a possible implementation, when step 717 is not performed. The SMF may generate a traffic steering rule based on the path identifier and information used to distinguish paths. For example, the information used to distinguish the first path corresponding to the path identifier 1 is 6G, the information used to distinguish the second path corresponding to the path identifier 2 is 5G, and the traffic steering mode is an active standby mode. In this case, the SMF may determine, based on the priority of 6G being relatively higher than that of 5G, that the first path is an active path, and the second path is a standby path. The SMF may generate, based on the path identifier, a traffic steering rule that includes the path identifier 1 and the path identifier 2. This traffic steering rule may be represented by using Table 4 above, and details are not described herein again.

In another possible implementation, when step 717 is performed. The SMF may obtain an updated policy rule sent by the PCF, and then generate, based on the updated policy rule, a traffic steering rule that includes the path identifier 1 and 2. This traffic steering rule may be represented by using Table 4 above, and details are not described herein again.

In a possible implementation, the SMF sends an N4 session establishment request (N4 Session Establishment Request) message to the UPF. The message includes the traffic steering rule mentioned above.

Step 719: The SMF sends the path identifier 2 and the traffic steering rule to the AMF 2.

The SMF can generate an traffic steering rule (for example, an ATSSS rule) used by the UE. This traffic steering rule includes the path identifier 2. For example, the traffic steering rule may be represented by using Table 4 above. It should be noted that the traffic steering rule used by the UPF is used for downlink data transmission, and the traffic steering rule used by the UE is used for uplink data transmission. The IP address in the service descriptor of the traffic steering rule used by the UE is different from the IP address in the service descriptor of the traffic steering rule used by the UPF. The IP address is used to identify the destination of an IP service flow.

The path identifier 2 is used by the AMF 2 to determine the RAN corresponding to the path identifier 2. For example, the UE is connected to the AMF 2 through the RAN 1 and the RAN 2, that is, the AMFs on the first path and the second path are the same, that is, the AMF 2. The AMF 2 can determine, based on the path identifier 2, that the second path where the RAN 2 is located is used.

In a possible implementation, the path identifier 2 and the traffic steering rule are sent through an N1N2 message (Namf_Communication_N1N2MessageTransfer) for transmission.

Step 720: AMF2 sends the traffic steering rule to the UE through RAN2.

In a possible implementation, AMF2 may determine, based on the path identifier sent by the SMF, which access network device (for example, RAN) the information is sent to. For example, AMF2 determines, based on the path identifier 2, to send the traffic steering rule to RAN2 in the second path.

In a possible implementation, the traffic steering rule includes the path identifier 1, the path identifier 2, and the service descriptor. The UE can determine, based on the traffic steering rule, which path the service data should be transmitted through. For example, by default, the active standby mode is used. The UE determines, based on the path corresponding to the path identifier 1, that the path is an active path. When the first path corresponding to the path identifier 1 is available, the UE transmits, on the first path, a service flow corresponding to the service descriptor. Alternatively, when the first path is unavailable, and the second path identified by the path identifier 2 is available, the second path is used to transmit the service flow corresponding to the service descriptor.

In another possible implementation, the traffic steering rule includes a path identifier 1, a path identifier 2, a traffic steering mode, and a service descriptor. The UE can determine, based on the traffic steering rule, which path the service data should be transmitted through. For example, the UE determines, based on the traffic steering mode, that the traffic steering mode is an active standby mode. The path corresponding to the path identifier 1 is an active path, and the path corresponding to the path identifier 2 is a standby path. When the first path corresponding to the path identifier 1 is available, the UE transmits, through the first path, a service flow corresponding to the service descriptor. Alternatively, when the first path is unavailable, and the second path identified by the path identifier 2 is available, the UE transmits, through the second path, the service flow corresponding to the service descriptor.

For example, the UE determines, based on the path identifier 1, that the corresponding first path is available. For related descriptions, refer to step 609. The UE determines, based on the path identifier 2, that the corresponding second path is available. For related descriptions, refer to step 618.

It should be noted that, for subsequent steps of the UE in establishing, through the RAN2 and the AMF2, the user plane channel of the second path, refer to steps 313 to 318 in FIG. 3. Details are not described herein again.

Through the steps of method 700, when the UE accesses the network through two paths of a 3GPP access type, the UE first obtains, through a registration procedure, path identifiers corresponding to different paths under the same access type. When the UE establishes a session through multiple different paths under the same access type, the UE can learn, by receiving a traffic steering rule that includes the path identifier, which path the service data should be transmitted through, thereby better performing service transmission.

Through the steps of method 700, when the UE accesses the network through two paths of a 3GPP access type, the AMF allocates a path identifier. The UE receives the first path identifier from the first path and the second path identifier from the second path. In this way, both the UE and the network can distinguish between the two different paths based on the path identifiers. Moreover, the UE receives a traffic steering rule that includes the path identifier, and the UE can transmit the service data through the path corresponding to the path identifier based on the traffic steering rule corresponding to the service data, thereby improving transmission efficiency.

As shown in FIG. 8, a method 800 applicable to this application is described. This method is applicable when UE accesses a network through multiple paths (for example, two paths of a 3GPP access type) of the same access type. In the method 800, in a registration procedure, the UDM allocates a path identifier to the UE and sends the path identifier to the UE. By using the method 800, the UE can determine a transmission path based on the path identifier. The method includes the following steps:
In a possible implementation, the AN message includes capability information. For a related description of the capability information, refer to step 601 in FIG. 6. Details are not described herein again.

In a possible implementation, when the UE determines that it has a dual connectivity capability, or the UE expects to access the network simultaneously through two different paths of a 3GPP access type, the AN message sent in step 801 includes capability information. For a related description, refer to step 601 in FIG. 6. Details are not described herein again.

In this embodiment, the UE selects RAN1 as the first path to initiate a registration procedure, and sends an AN message to the RAN1 as an example for description.

In another possible implementation, for related descriptions of the AN message, refer to step 201 in FIG. 2. That is, the AN message may not include the capability information.

Step 802: RAN1 selects the AMF.

In a possible implementation, the capability information is in a field that can be parsed by the RAN in the AN message. RAN1 selects, based on the capability information, an AMF that supports dual connectivity. For related descriptions of the AMF that supports dual connectivity, refer to step 602 in FIG. 6. Details are not described herein again.

Step 803: RAN1 sends a registration request message to AMF1.

The registration request message includes capability information.

Optionally, the RAN1 sends, to the AMF1, information used to distinguish paths. In a possible implementation, the information used to distinguish paths includes one or more of location information, an access type, an access technology type, a registration type, and a RAN identifier. Since the cells accessed by the UE through different paths are different, the ULI may be used to identify different paths.

In a possible implementation, the RAN1 sends, to the AMF 1, an NGAP message, which may also be referred to as an N2 message. The N2 message includes a registration request message and information used to distinguish paths. This may be understood as that, in the N2 message, the registration request message and the information used to distinguish paths exist side by side.

In another possible implementation, the RAN1 may send, to the AMF1, a registration request message and information used to distinguish paths by using two N2 messages. In this case, the N2 message includes the registration request message and the information used to distinguish paths. It may be understood as that, in the N2 message, the registration request message and the information used to distinguish paths exist side by side.

In another possible implementation, the RAN1 may send a registration request message to the AMF 1 through one N2 message. The registration request message includes UE capability information and information used to distinguish paths.

Step 804 (optional): The AMF 1 triggers an authentication and security procedure (authentication and security procedure) with the UE, AUSF, and UDM.

For related descriptions, refer to the related descriptions in step 204 in Figure 2. Details are not described herein again.

Step 805: The AMF 1 sends a registration request to the UDM.

The registration request is used by the AMF 1 to register with the UDM as an AMF serving the UE. For example, the registration request is an Nudm_UECM_Registration request.

The registration request includes indication information. the indication information indicates that the UE supports a plurality of radio capabilities; and; or, indicate that the UE supports a multi-registration capability, or indicate that the UE accesses the network in a multi-connection manner. It should be noted that the indication information may be the same as the capability information reported by the UE in step 801, or may be different from the capability information reported by the UE in step 801. For example, when is not, it may be understood that the AMF 1 processes the information reported by the UE. For example, the capability information reported by the UE indicates that the UE supports dual connectivity, and the indication information sent by the AMF 1 to the UDM indicates that the UE accesses the network in a multi-connection manner. It should be noted that the name of the multiple wireless capabilities may also be replaced with any one of the extended dual connectivity names or multiple connectivity names in the foregoing dual connectivity architecture.

Optionally, the registration request further includes path differentiation information. (for example, one or more of location information, an access type, an access technology type, a registration type, a RAN identifier, and an AMF identifier). The AMF 1 may determine the access type, the access technology, and the RAN identifier based on the access network device information, and the AMF 1 may obtain the location information and the registration type based on the registration request message. For example, the RAN1 sends an N2 message to the AMF1, the N2 message includes the location information and the registration request message, and the registration request message includes the registration type. It should be noted that the information used to distinguish paths is information used to distinguish the first path or information used to identify the first path.

In a possible implementation, the AMF 1 may select, based on the capability information or the registration type, a UDM that supports dual registration. For example, the registration type is a newly added registration type, and the registration type is used to indicate that the UE registers two paths. For example, the name of the newly added registration type may be DualSteer Registration. A name herein is not limited.

Step 806: The UDM allocates a path identifier (for example, a path identifier).

In a possible implementation, the UDM allocates the path identifier based on the indication information.

Optionally, the UDM may query subscription data of the UE based on an identifier of the UE. The subscription data of the UE includes capability information of the UE, so as to determine whether the UE is allowed to access the network through dual connectivity. In a case where the subscription data of the UE is that the UE is allowed to access the network through dual connectivity, the path identifier is allocated. It may be understood that, in a case where the UDM determines, based on the subscription data of the UE, that the UE is not allowed to access the network through dual connectivity, the UDM does not allocate the path identifier.

In a possible implementation, the UDM may store the information used to distinguish the first path and the path identifier 1, or the correspondence between the information used to distinguish the first path and the path identifier 1, in the subscription data or context information corresponding to the UE.

In this embodiment, for example, the UDM allocates the path identifier 1 to the first path in which the AMF 1 is located.

Step 807: The UDM sends a registration response to the AMF 1.

The registration response message includes the path identifier 1.

Optionally, the registration response message further includes information used to distinguish the first path, for example, a RAN identifier, so that the AMF can determine a corresponding path based on the information used to distinguish the paths.

For example, the registration response is a Nudm_UECM_Registration Response.

Step 808: AMF1 sends a registration accept (for example, Registration Accept) message to the UE through RAN1.

The registration accept message includes the path identifier 1, and the path identifier 1 is used by the UE to determine/identify/recognize/mark the first path.

In a possible implementation, after receiving the path identifier, AMF1 may store the information used to distinguish the first path and the path identifier 1, or the correspondence between the information used to distinguish the first path and the path identifier 1, in the context information of the UE.

In a possible implementation, the UE stores the path identifier 1. For example, the UE may associate/ map the path identifier 1 with one or more of an access technology type, a RAN identifier, an access type, or a used protocol stack, interface, or link that is corresponding to the current path. That is, the UE may associate/map the path identifier 1 with the currently connected RAN1. For example, the UE may associate/map the path identifier 1 with the currently connected RAN1 in a manner of circuit logic, line logic, or protocol stack logic. Subsequently, the UE may determine, based on the path identifier 1 and the association/mapping relationship, the first path corresponding to the RAN1.

Step 809: The UE sends an AN message to RAN2.

The AN message includes capability information. For a related description of the capability information, refer to step 601 in FIG. 6, and details are not described herein again.

It should be noted that when the UE determines that it is desired to access the network simultaneously through two different paths, step 809 is performed. For example, before the UE sends the AN message to the RAN2, the UE determines that it can access the network through two paths, and the UE determines that it has already accessed the network through the first path. For example, the UE may determine, based on the dual connectivity information, that it can access the network through two paths. For a related description of the dual connectivity, refer to step 601 in FIG. 6.

In this embodiment, an example in which the UE selects the RAN2 as the second path to initiate a registration procedure, and sends the AN message to the RAN2 is used for description.

Step 810: RAN2 selects an AMF.

For the relevant description of selecting an AMF, refer to step 602, and it will not be repeated here.

It should be noted that the AMF selected by RAN2 may be AMF1, or may be AMF2, which is different from AMF1.

In this embodiment, an example in which RAN2 selects AMF2 is used for description.

Step 811: RAN2 sends a registration request message to AMF2.

The registration request message includes capability information. For related descriptions, refer to step 803, and it will not be repeated here.

Step 812: AMF 2 triggers an authentication and security procedure between the UE, AUSF, and UDM.

For related descriptions, refer to the relevant explanations in step 204 in Figure 2. These details will not be repeated here.

Step 814: AMF 2 sends a registration request to the UDM.

The registration request includes indication information. For related descriptions, refer to the relevant explanations in step 805 above. These details will not be repeated here.

Step 814: The UDM allocates a path identifier (e.g., path identifier).

In a possible implementation, the UDM allocates a path identifier based on the indication information. For example, the UDM allocates different path identifiers for different paths of the same UE (for example, the SUPIs of the UE on different paths are the same)). Alternatively, the UDM allocates a globally unique identifier for each path. That is, when the UDM allocates a path, the UDM does not distinguish between different paths of the same UE and different paths of different UEs.

Optionally, the UDM may query subscription data of the UE based on the identifier of the UE, to determine whether the UE is allowed to access the network through dual connectivity. If the subscription data of the UE indicates that the UE is allowed to access the network through dual connectivity, the path identifier is allocated. It can be understood that, in a case in which the UDM determines, based on the subscription data of the UE, that the UE is not allowed to access the network through dual connectivity, the UDM does not allocate a path identifier.

In a possible implementation, the UDM may store, in the subscription data or the context information corresponding to the UE, information used to distinguish the second path and the path identifier 2, or a correspondence between the information used to distinguish the second path and the path identifier 2.

In this embodiment, an example in which the UDM allocates a path identifier 2 to the second path on which the AMF2 is located is used for description.

Step 815: The UDM sends a registration response to the AMF2.

The registration response message includes the path identifier 2.

Optionally, the registration response message further includes information used to distinguish the second path, for example, a RAN identifier, so that the AMF can determine a corresponding second path based on the information used to distinguish the second path.

For example, the registration response is Nudm_UECM_Registration Response.

Step 816: The AMF 2 sends a registration accept (Registration Accept) message to the UE by using the RAN 2.

The registration accept message includes the path identifier 2, and the path identifier 2 is used by the UE to determine/identify/mark the second path.

In a possible implementation, after the AMF 2 receives the path identifier, the AMF 2 may store, in the context information of the UE, the information used to distinguish between the second path and the path identifier 2, or the correspondence between the information used to distinguish between the second path and the path identifier 2.

In a possible implementation, the UE stores the path identifier 2. For example, the UE associates/maps the path identifier 2 with one or more of an access technology type, a RAN identifier, an access type, or a used protocol stack, an interface, or a link corresponding to the current path. That is, the UE may associate/map the path identifier 2 with the currently connected RAN 2. For example, the UE may associate/map the path identifier 2 with the currently connected RAN 2 by using circuit logic, line logic, protocol stack logic, or the like. Subsequently, the UE may determine, based on the path identifier 2 and the association/mapping relationship, the second path corresponding to the RAN 2.

Step 817 (optional): The UDM sends a path identifier and information used to distinguish paths to the UDR.

For example, the UDM sends a path identifier and information used to distinguish paths to the UDR by using a data management create/update request message (for example, Nudr_DM_Create/Update request).

In a possible implementation, the path identifier and the information used to distinguish paths include a path identifier 1 and information used to distinguish the first path, as well as a path identifier 2 and information used to distinguish the second path. For example, the information used to distinguish paths is an identifier of an AMF, that is, the information used to distinguish the first path is an identifier of an AMF 1, and the information used to distinguish the second path is an identifier of an AMF 2. The UDM sends the identifier of the AMF 1 and the path identifier 1 to the UDR, and also sends the identifier of the AMF 2 and the path identifier 2 to the UDR. In a subsequent session establishment procedure, the PCF may obtain the path identifier and the information used to distinguish paths from the UDR.

It should be noted that a sequence of performing step 817 is not limited in this application. For example, step 817 may be performed after step 814.

Step 818 (optional): The UDR sends the path identifier and the information used to distinguish paths to the PCF.

In a possible implementation, the PCF generates a routing rule (for example, a URSP) based on the path identifier and information used to distinguish paths, and the routing rule includes the path identifier. The information used to distinguish paths may be used to determine a path priority. Subsequently, the routing rule is sent to the UE, and the UE may select, by using the routing rule, a path corresponding to the path identifier from a plurality of paths of a same access type to transmit a service. When the routing rule is a URSP, it may be understood that an enhanced URSP (enhanced URSP) is generated herein.

In another possible implementation, the PCF receives, from the AMF 1, the path identifier 1 and the information used to distinguish the first path, and receives, from the AMF 2, the path identifier 2 and the information used to distinguish the second path. It should be noted that, when the AMFs in the first path and the AMFs in the second path are the same, for example, the AMFs are both the AMF 1, the PCF may receive, from the AMF 1, the path identifier 1 and the information used to distinguish the first path, and the path identifier 2 and the information used to distinguish the second path.

In a possible implementation, the PCF is an AM-PCF, and is mainly responsible for access mobility policy control.

According to the step of the method 800, when the UE accesses the network by using two paths of the 3GPP access type, the UDM allocates a path identifier, the UE receives the first path identifier from the first path, and receives the second path identifier from the second path. Therefore, both the UE and the network can distinguish two different paths according to the path identifier.

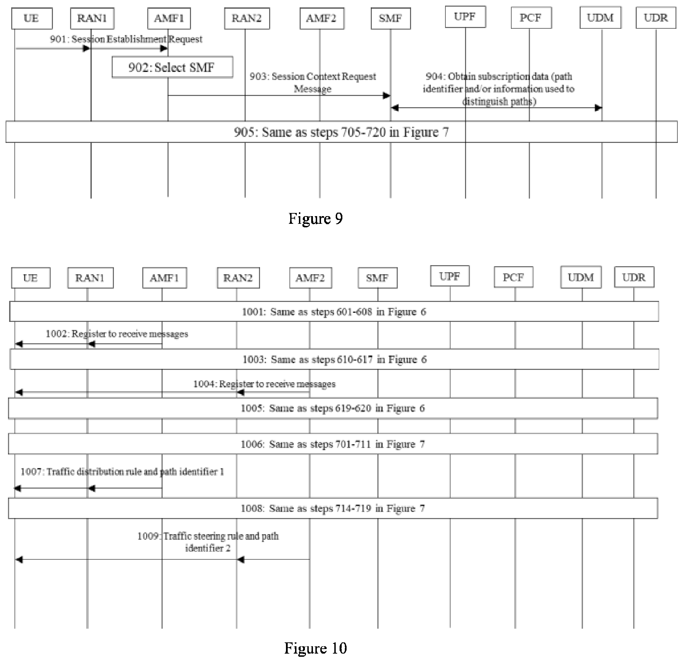

As shown in FIG. 9, with reference to FIG. 8, a method 900 applicable to this application is described. The method is applicable to a scenario where UE accesses a network by using a plurality of paths (for example, two paths of a 3GPP access type) of a same access type. The UDM first allocates a path identifier to the UE in a registration procedure and sends the path identifier to the UE. In a session establishment procedure, the SMF generates an traffic steering rule based on the path identifier, and the UE obtains the traffic steering rule. In a possible implementation, the UE performs the steps in the method 900 after the registration procedure is completed on both paths. In another possible implementation, the UE performs the session establishment procedure of the first path in the method 900 after the first path completes registration, and the UE performs the session establishment procedure of the second path in the method 900 after the second path completes registration. According to the method 900, the UE can determine the transmission path of the service data based on the path identifier. The method includes the following steps:
Step 901: The UE sends a session establishment request message to the AMF1 through the RAN1.

In a possible implementation, the session establishment request message is a PDU session establishment request (PDU Session Establishment Request) message. For related descriptions of the PDU session establishment request message, refer to step 301 in FIG. 3.

This embodiment uses an example in which the UE selects the RAN1 as the first path to initiate a session establishment procedure, and sends a session establishment request message to the AMF1 through the RAN1.

Step 902: The AMF selects an SMF.

In a possible implementation, AMF1 selects, based on capability information (for example, the UE supports dual connectivity)), an SMF that supports dual connectivity. The SMF that supports dual connectivity may be understood as that the SMF can identify a newly added parameter in a message, for example, a path identifier, or information used to distinguish paths. The SMF supports generating a traffic steering rule (for example, an enhanced traffic steering rule) that includes a path identifier. By using the traffic steering rule that includes the path identifier, the path identifier corresponding to the traffic steering rule can be selected from multiple paths of the same access type, to transmit a service. For related descriptions of the capability information, refer to step 601 in FIG. 6.

Step 903: AMF1 sends a session context request message to the SMF.

Optionally, the session context request message includes a path identifier 1 and/or information used to distinguish the first path. The path identifier 1 is allocated by the UDM in step 806 in FIG. 8. The information used to distinguish the first path may be one or more of location information, an access type, an access technology, a registration type, a RAN identifier, or an AMF identifier. The location information is, for example, ULI, and the ULI includes a cell identifier. The cell identifier is an identifier of a cell accessed by the UE in the RAN 1. Since the cells accessed by the UE in different paths are different, the different paths may be identified by using the ULI. For related descriptions, refer to step 703. Details are not described herein again.

It should be noted that the session context request message may not include the path identifier 1 and/or the information used to distinguish the first path. Subsequently, the SMF obtains the path identifier and the information used to distinguish the paths from the UDM. The cells accessed by the UE in different paths are different, and the location information is, for example, ULI. The ULI includes a cell identifier, and the cell identifier is an identifier of a cell accessed by the UE in the RAN 1. For related descriptions, refer to step 703. Details are not described herein again.

In a possible implementation, the session context request message is a PDU session creation session management context request (Nsmf_PDUSession_CreateSMContext Request)) message, or a PDU session update session management context request (Nsmf_PDUSession_UpdateSMContext Request)) message.

Step 904: The SMF obtains subscription data from the UDM.

The subscription data (for example, session management subscription data) may include a path identifier and/or information used to distinguish paths. Among them, the path identifier and the information used to distinguish paths may be a path identifier 1 and information used to distinguish a first path, or a path identifier 2 and information used to distinguish a second path. The path identifier 1 and the information used to distinguish the first path are stored by the UDM in step 806 in FIG. 8. The path identifier 2 and the information used to distinguish the second path are stored by the UDM in step 814 in FIG. 8.

In one possible implementation, the subscription data includes a path identifier. For example, the SMF sends, to the UDM, information used to distinguish the first path. The information is obtained by the SMF from the AMF1 in step 903. The UDM determines, based on the information used to distinguish the first path, a corresponding path identifier, that is, the path identifier 1, and sends the path identifier to the SMF. For example, the information used to distinguish the first path is an AMF identifier, that is, AMF1. The SMF sends the UE's SUPI and AMF1 to the UDM. The UDM queries the subscription data or context information corresponding to the UE based on the SUPI, and sends, based on the stored association relationship between the path identifier and the information used to distinguish the path, the path identifier corresponding to AMF1 (that is, the path identifier 1) to the SMF.

In another possible implementation, the subscription data includes a path identifier and information used to distinguish a path. For example, the information used to distinguish the path is an AMF identifier, that is, the path identifier and the information used to distinguish the path are AMF1 corresponding to the path identifier 1, and AMF2 corresponding to the path identifier 2. The SMF receives, from the AMF1 in step 903, a session context request message. Therefore, the SMF can subsequently determine to send data to the AMF1 based on the path identifier 1. Another example is that the UDM queries the subscription data or context information corresponding to the UE based on the SUPI, and sends, based on the stored association relationship between the path identifier and the information used to distinguish the path, the path identifier corresponding to AMF1 (that is, the path identifier 1) and the path identifier corresponding to AMF2 (that is, the path identifier 2).

It should be noted that, in the case where the session context request message includes the path identifier 1, the subscription data may also not include the path identifier and the information used to distinguish paths. For a related description of the subscription data, refer to step 303 in FIG. 3.

In a possible implementation, after receiving the path identifier, the SMF may store the path identifier in the context information of the UE. For example, the SMF may store, in the context information of the UE, an association relationship between the path identifier 1 and the information used to distinguish the first path, and an association relationship between the path identifier 2 and the information used to distinguish the second path.

Step 905: Refer to related descriptions of steps 705 to 720 in FIG. 7. Details are not described herein again.

By performing the steps of method 900, when the UE accesses the network through two paths of a 3GPP access type, the UDM allocates a path identifier, and the UE receives the first path identifier from the first path, and receives the second path identifier from the second path. In this way, both the UE and the network can distinguish two different paths based on the path identifier. In addition, the UE receives the traffic steering rule that includes the path identifier, and then the UE may transmit the service data through the path corresponding to the path identifier based on the traffic steering rule corresponding to the service data, thereby improving transmission efficiency.

As shown in FIG. 10, a method 1000 applicable to this application is described. This method is applicable to a scenario in which UE accesses a network through multiple paths (for example, two paths of a 3GPP access type) of a same access type. In the method 1000, in a registration procedure, the AMF allocates a path identifier to the UE. In a session establishment procedure, the SMF generates a traffic steering rule based on the path identifier. The UE obtains the path identifier and the traffic steering rule. By using the method 1000, the UE can determine, based on the path identifier, a transmission path of service data. The method includes the following steps:
Step 1001: Refer to the related descriptions of steps 601-608 in FIG. 6. Details are not described herein again.
Step 1002: AMF1 sends, through RAN1, a Registration Accept message to the UE.
   It should be noted that the Registration Accept message sent by AMF1 through RAN1 does not include the path identifier 1.
Step 1003: Refer to the related descriptions of steps 610-617 in FIG. 6. Details are not described herein again.
Step 1004: AMF2 sends a registration accept (Registration Accept) message to the UE through RAN2.
   It should be noted that the registration accept message sent by AMF2 through RAN2 does not include path identifier 2.
Step 1005: Refer to the relevant descriptions of steps 619-620 in Figure 6. Details are not described herein again.
Step 1006: Refer to the relevant descriptions of steps 701-711 in Figure 7. Details are not described herein again.
Step 1007: AMF1 sends a traffic steering rule and path identifier 1 to the UE through RAN1.

In a possible implementation, the traffic steering rule includes a path identifier 1 and a service descriptor. Based on the traffic steering rule, the UE can determine which path the service data should be transmitted through. For example, the default mode is Active standby mode. According to the traffic steering rule, the UE determines that the path corresponding to the path identifier 1 is an Active path. When the first path corresponding to the path identifier 1 is available, the UE transmits the service flow corresponding to the service descriptor through the first path.

In another possible implementation, the traffic steering rule includes a path identifier 1, an offloading mode, and a service descriptor. Based on the traffic steering rule, the UE can determine which path the service data should be transmitted through. For example, according to the offloading mode, the UE determines that the mode is Active standby mode, and the path corresponding to the path identifier 1 is an Active path. When the first path corresponding to the path identifier 1 is available, the UE transmits the service flow corresponding to the service descriptor through the first path.

The path identifier 1 is used by the UE to determine/identify/recognize/mark the first path.

In a possible implementation, the UE stores the path identifier 1. For example, the UE associates/maps the path identifier 1 to one or more of an access technology, an access type, a used protocol stack, an interface, or a link corresponding to the current path. That is, the UE may associate/map the path identifier 1 with the currently connected RAN 1. For example, the UE may associate/map the path identifier 1 with the currently connected RAN 1 by using circuit logic, circuit logic, protocol stack logic, or the like. Subsequently, the UE may determine, based on the path identifier 1 and the association/mapping relationship, the first path corresponding to the RAN1.

Step 1008: Refer to related descriptions of steps 714 to 719 in FIG. 7. Details are not described herein again.

Step 1009: The AMF 2 sends the traffic steering rule and the path identifier 2 to the UE by using the RAN 2.

In a possible implementation, the traffic steering rule includes a path identifier 1, a path identifier 2, and a service descriptor. The UE may determine, based on the traffic steering rule, a path by which the service data should be transmitted. For example, the default mode is the active standby mode, the UE uses the path corresponding to the path identifier 1 as the active path, and the UE transmits, on the first path, the service flow corresponding to the service descriptor when the first path corresponding to the path identifier 1 is available. Alternatively, when the first path is unavailable and the second path identified by the path identifier 2 is available, the second path is used to transmit the service flow corresponding to the service descriptor.

In another possible implementation, the traffic steering rule includes a path identifier 1, a path identifier 2, an offloading mode, and a service descriptor. The UE may determine, based on the traffic steering rule, a path by which the service data should be transmitted. For example, the UE transmits, according to the offloading mode as the active standby mode, the path corresponding to the path identifier 1 is the active path, and the path corresponding to the path identifier 2 is the standby path, the UE transmits, on the first path, the service flow corresponding to the service descriptor when the first path corresponding to the path identifier 1 is available. Alternatively, when the first path is unavailable and the second path identified by the path identifier 2 is available, the second path is used to transmit the service flow corresponding to the service descriptor.

The path identifier 2 is used by the UE to determine/identify/mark the second path.

In a possible implementation, the UE stores the path identifier 2. For example, the UE associates/maps the path identifier 2 with one or more of an access technology type, an access type, a used protocol stack, an interface, or a link corresponding to the current path. That is, the UE may associate/map the path identifier 2 with the currently connected RAN 2. For example, the UE may associate/map the path identifier 2 with the currently connected RAN 2 by using circuit logic, circuit logic, protocol stack logic, or the like. Subsequently, the UE may determine, based on the path identifier 2 and the association/mapping relationship, the second path corresponding to the RAN 2.

Through the steps of method 1000, when the UE accesses the network through two paths of the same 3GPP access type, the AMF allocates a path identifier. The UE then receives, from the first path, a traffic steering rule that includes the first path identifier, and receives, from the second path, a traffic steering rule that includes the second path identifier. In this way, both the UE and the network can distinguish between the two different paths based on the path identifiers. Consequently, the UE can transmit service data through the path corresponding to the path identifier based on the traffic steering rule corresponding to the service data, thereby improving transmission efficiency.

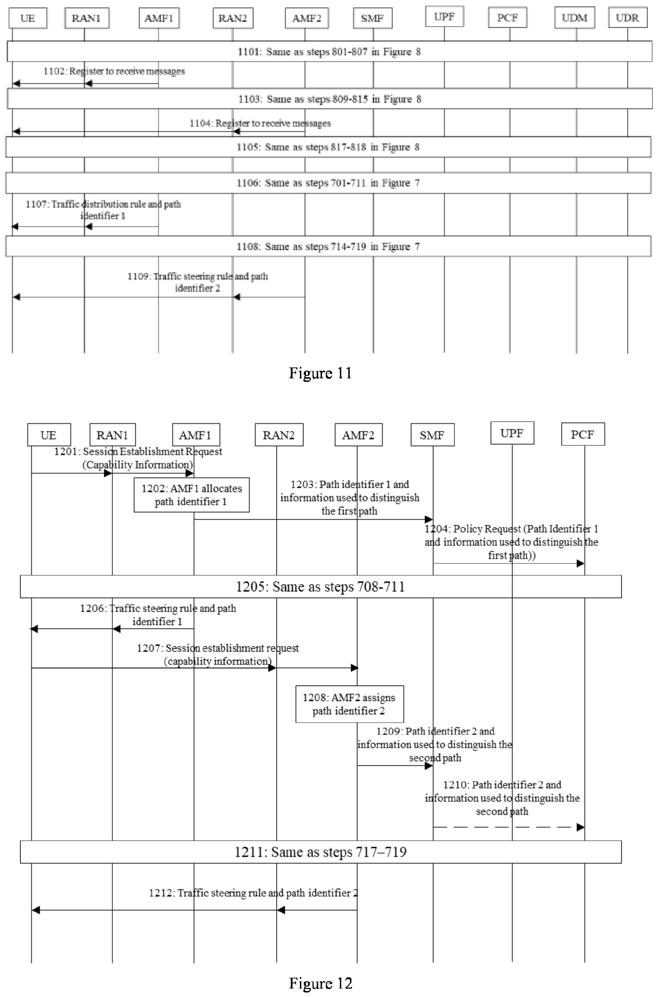

As shown in FIG. 11, a method 1100 applicable to this application is described. This method is applicable when the UE accesses the network through multiple paths (for example, two paths of the 3GPP access type) of the same access type. In method 1100, the UDM allocates a path identifier to the UE in a registration procedure. In a session establishment procedure, the UE obtains the path identifier and the traffic steering rule. Through method 1100, the UE can determine, based on the path identifier, a transmission path for the service data. This method includes the following steps:
Step 1101: Refer to the relevant descriptions of steps 801-807 in FIG. 8. Details are not described herein again.
Step 1102: AMF1 sends a registration accept (Registration Accept) message to the UE through RAN1.
   It should be noted that the registration accept message sent by AMF1 through RAN1 does not include the path identifier 1.
Step 1103: Refer to the relevant descriptions of steps 809-815 in FIG. 8. Details are not described herein again.
Step 1104: AMF2 sends a registration accept (Registration Accept) message to the UE through RAN2.
   It should be noted that the registration accept message sent by AMF2 through RAN2 does not include path identifier 2.
Step 1105: Refer to the relevant descriptions of steps 817-818 in FIG. 8. Details are not described herein again.
Step 1106: Refer to the relevant descriptions of steps 701-711 in FIG. 7. Details are not described herein again.
Step 1107: AMF1 sends a traffic steering rule and path identifier 1 to the UE through RAN1.
   For related descriptions, refer to the relevant descriptions of step 1007. Details are not described herein again.
Step 1108: Refer to related descriptions of steps 714 to 719 in FIG. 7. Details are not described herein again.
Step 1109: The AMF 2 sends the traffic steering rule and the path identifier 2 to the UE by using the RAN 2.

For related description, refer to related description of step 1009 in FIG. 10. Details are not described herein again.

According to the step of the method 1100, when the UE accesses the network by using two paths of the 3GPP access type, the UDM allocates the path identifier, the UE receives, from the first path, the traffic steering rule that includes the first path identifier, and receives, from the second path, the traffic steering rule that includes the second path identifier. Therefore, both the UE and the network can distinguish two different paths based on the path identifier, and the UE can transmit, by using the traffic steering rule corresponding to the service data, the service data on the path corresponding to the path identifier, thereby improving transmission efficiency.

As shown in FIG. 12, a method 1200 applicable to this application is described. The method is applicable to a scenario where UE accesses a network by using a plurality of paths (for example, two paths of a 3GPP access type) of a same access type. In the method 1200, in a session establishment procedure, the AMF allocates a path identifier to the UE, the SMF generates an traffic steering rule based on the path identifier, and the UE obtains the path identifier and the traffic steering rule. By using the method 1200, the UE may determine the transmission path of the service data based on the path identifier. The method includes the following steps:
Step 1201: The UE sends a session establishment request message to the AMF1 through the RAN1.

The session establishment request message includes capability information. For a related description of the capability information, refer to step 601 in FIG. 6, and details are not described herein again.

In a possible implementation, the session establishment request message is a PDU session establishment request (PDU Session Establishment Request) message. For a related description of the PDU session establishment request message, refer to step 301 in FIG. 3.

This embodiment uses an example in which the UE selects the RAN1 as the first path to initiate a session establishment procedure, and sends a session establishment request message to the AMF1 through the RAN1. Step 1202: The AMF1 allocates a path identifier (for example, a path identifier).

For a related description of the AMF1 allocating the path, refer to step 605 in FIG. 6.

In this embodiment, an example in which the AMF 1 allocates the path identifier 1 to the first path is used for description.

In a possible implementation, the AMF 1 selects, based on capability information (for example, the UE supports dual connectivity), an SMF that supports dual connectivity. For related descriptions, refer to step 702 in FIG. 7.

Step 1203: The AMF 1 sends, to the SMF, the path identifier 1 and information used to distinguish the first path.

The information used to distinguish the first path may be one or more of location information, an access type, an access technology, a registration type, a RAN identifier, and an AMF identifier. The location information is, for example, a ULI, where the ULI includes a cell identity, and the cell identity is an identity of a cell in the RAN1 to which the UE accesses. Because the UE accesses different cells on different paths, the different paths may be identified by using the ULI. For example, the information used to distinguish the first path is a RAT type. For example, the RAT type corresponding to the first path connecting the RAN 1 and the AMF 1 is 6G, and the RAT type corresponding to the second path connecting the RAN 2 and the AMF 2 is 5G. Therefore, the SMF may subsequently determine, based on the path identifier 1, to send data to the AMF 1 on the first path corresponding to 6G.

In a possible implementation, AMF1 sends a session management context establishment request for a PDU session (Nsmf_PDUSession_CreateSMContext Request) message, or sends a session management context update request for a PDU session (Nsmf_PDUSession_UpdateSMContext Request) message to the SMF, to send the path identifier 1 and the information used to distinguish the first path to the SMF.

Step 1204: The SMF sends a policy request message to the PCF.

The policy request message includes a path identifier and information used to distinguish the path.

In a possible implementation, the SMF selects, based on the path identifier, a PCF that supports multi-connection, and sends a policy request message to the PCF that supports multi-connection. The PCF that supports multi-connection may be understood as that the PCF can identify an added parameter, for example, a path identifier. The PCF supports generating a policy rule (for example, an enhanced PCC rule) that includes the path identifier. The policy rule is used to select, from a plurality of paths in a same access type, a path corresponding to the path identifier for transmitting a service.

In a possible implementation, the policy request message is a policy association establishment request message (SM Policy Association Establishment Request) message, or a policy association modification request message (SM Policy Association Modification Request) message.

Step 1205: Refer to the related descriptions of steps 708 to 711 in FIG. 7. Details are not described herein again.

Step 1206: AMF1 sends the traffic steering rule and the path identifier 1 to the UE via RAN1.

For related descriptions, refer to the related descriptions of step 1007 in FIG. 10. Details are not described herein again.

Step 1207: The UE sends a session establishment request message to the AMF 2 via the RAN 2.

The session establishment request message includes capability information. For a related description of the capability information, refer to step 601 in FIG. 6, and details are not described herein again.

In a possible implementation, the session establishment request message is a PDU session establishment request (PDU Session Establishment Request) message. For a related description of the PDU session establishment request message, refer to step 301 in FIG. 3.

This embodiment is described by using an example in which the UE selects the RAN1 as the first path to initiate a session establishment procedure, and sends a session establishment request message to the AMF1 through the RAN1.

Step 1208: AMF2 allocates a path identifier (for example, path identifier).

For a related description of the path allocated by AMF2, refer to step 614 in FIG. 6.

In this embodiment, an example in which AMF2 is used as the second path and allocates the path identifier 2 is used for description.

Step 1209: AMF2 sends the path identifier 2 and information used to distinguish the second path to the SMF.

The information used to distinguish the second path may be one or more of location information, access type, access technology, registration type, RAN identifier, and AMF identifier. The location information may be, for example, a ULI. The ULI includes a cell identifier, and the cell identifier is an identifier of a cell accessed by the UE in the RAN1. Since the UE accesses different cells through different paths, the different paths may be identified by using the ULI. For example, the information used to distinguish the second path is a RAT type. For example, a RAT type corresponding to the first path that connects the RAN1 and the AMF1 is 6, and a RAT type corresponding to the second path that connects the RAN2 and the AMF2 is 5. Therefore, the SMF may subsequently determine, based on the path identifier 2, to send data to the AMF2 on the second path corresponding to 5G.

Step 1210 (optional): The SMF sends the path identifier 2 and information used to distinguish the second path to the PCF.

In a possible implementation, the path identifier 2 and the information used to distinguish the second path are sent through a policy request message. For example, a policy association establishment request message (SM Policy Association Establishment Request) or a policy association modification request message (SM Policy Association Modification Request) message.

Step 1211: Refer to the related descriptions of steps 717 to 719 in Figure 7. Details are not described herein again.

Step 1212: AMF2 sends the traffic steering rule and the path identifier 2 to the UE through RAN2.

For related descriptions, refer to the related descriptions of step 1009 in Figure 10. Details are not described herein again.

By following the steps of method 1200, when the UE accesses the network through two paths of the same 3GPP access type, the AMF allocates a path identifier. The UE receives, from the first path, a traffic steering rule that includes the first path identifier, and receives, from the second path, a traffic steering rule that includes the second path identifier. In this way, both the UE and the network can distinguish between the two different paths based on the path identifiers. Consequently, the UE can transmit service data through the path corresponding to the path identifier based on the traffic steering rule corresponding to the service data, thereby improving transmission efficiency.

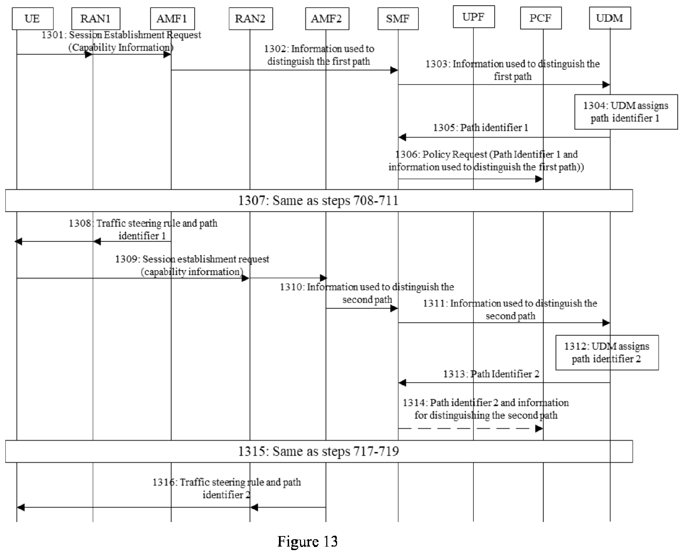

As shown in FIG. 13, a method 1300 applicable to this application is described. This method is applicable to a scenario in which the UE accesses the network through multiple paths (for example, two paths of the 3GPP access type) of the same access type. In method 1300, in a session establishment procedure, the UDM allocates a path identifier to the UE, the SMF generates a traffic steering rule based on the path identifier, and the UE obtains the path identifier and the traffic steering rule. Through method 1300, the UE can determine, based on the path identifier, a transmission path of service data. The method includes the following steps:
Step 1301: The UE sends a session establishment request message to the AMF1 through the RAN1.

The session establishment request message includes capability information. For a related description of the capability information, refer to step 601 in FIG. 6, and details are not described herein again.

In a possible implementation, the session establishment request message is a PDU session establishment request (PDU Session Establishment Request) message. For a related description of the PDU session establishment request message, refer to step 301 in FIG. 3, and details are not described herein again.

In this embodiment, the session establishment request message is used as an example for description. The session establishment request message is a session establishment request message sent by the UE to the AMF1 through the RAN1. The first path is a path used by the UE to send the session establishment request message to the AMF1.

Step 1302: The AMF1 sends information used to distinguish the first path to the SMF.

The information used to distinguish the first path may be one or more of location information, an access type, an access technology type, a registration type, a RAN identifier, and an AMF identifier. The location information, for example, is a ULI, and the ULI includes a cell identifier. The cell identifier is an identifier of a cell in which the UE accesses the RAN1. Since the UE accesses different cells through different paths, the ULI may be used to identify different paths. For example, the information used to distinguish the first path is a RAT type. For example, the RAT type corresponding to the first path for connecting the RAN1 and the AMF1 is 6G, and the RAT type corresponding to the second path for connecting the RAN2 and the AMF2 is 5G. Therefore, the SMF may subsequently determine, based on the path identifier 1, to send data to the AMF1 on the first path corresponding to 6G.

In a possible implementation, the information used to distinguish the first path implicitly indicates that the UE supports a multi-radio capability; or indicates that the UE supports a multi-registration capability, or indicates that the UE accesses a network in a multi-connection manner. It should be noted that the name of the multi-radio capability may also be replaced with any one of the names of the extended dual connectivity or multi-connectivity in the dual connectivity architecture.

In another possible implementation, the AMF1 sends path identifier allocation information to the SMF. The path identifier allocation information indicates that the UE supports a multi-radio capability; or indicates that the UE supports a multi-registration capability, or indicates that the UE accesses a network in a multi-connection manner.

In a possible implementation, the AMF1 sends, to the SMF, a session management context creation request (Nsmf_PDUSession_CreateSMContext Request)) message for a PDU session, or a session management context update request (Nsmf_PDUSession_UpdateSMContext Request)) message for a PDU session, to send information used to distinguish the first path to the SMF.

Step 1303: The SMF sends, to the UDM, information used to distinguish the first path.

In a possible implementation, the information used to distinguish the first path implicitly indicates that the UE supports a multi-radio capability, or indicates that a path identifier is allocated.

In another possible implementation, the SMF sends path identifier allocation information to the UDM. The path identifier allocation information indicates the allocation of a path identifier.

Step 1304: The UDM allocates a path identifier (for example, a path identifier).

In a possible implementation, the UDM allocates a path identifier based on information used to distinguish the first path or the path identifier allocation information.

Optionally, the UDM may query the subscription data of the UE to determine whether the UE is allowed to access the network through dual connectivity. When the subscription data of the UE indicates that the UE is allowed to access the network through dual connectivity, the path identifier is allocated. It can be understood that, when the UDM determines, based on the subscription data of the UE, that the UE is not allowed to use dual connectivity to access the network, the UDM will not allocate a path identifier.

In a possible implementation, the UDM may store the information used to distinguish the first path and the path identifier 1, or the correspondence between the information used to distinguish the first path and the path identifier 1, in the subscription data or context information corresponding to the UE.

In this embodiment, an example is used for description, in which the UDM allocates a path identifier 1 to the first path in which the AMF1 is located.

Step 1305: The UDM sends the path identifier 1 to the SMF.

Optionally, the UDM further sends, to the SMF, information used to distinguish the first path.

Step 1306: The SMF sends a policy request message to the PCF.

The policy request message includes a path identifier and information used to distinguish paths. For related descriptions, refer to step 1204 in FIG. 12. Details are not described herein again.

Step 1307: Refer to the relevant descriptions of steps 708 to 711 in FIG. 7. Details are not described herein again.

Step 1308: AMF1 sends a traffic steering rule and a path identifier 1 to the UE through RAN1.

For related descriptions, refer to the relevant descriptions of step 1007 in FIG. 10. Details are not described herein again.

Step 1309: The UE sends a session establishment request message to AMF2 through RAN2.

The session establishment request message includes capability information. For related descriptions of the capability information, refer to step 601 in FIG. 6. Details are not described herein again.

In a possible implementation, the session establishment request message is a PDU session establishment request (PDU Session Establishment Request) message. For a related description of the PDU session establishment request message, refer to step 301 in FIG. 3.

This embodiment is described by using an example in which the UE selects the RAN2 as the first path to initiate a session establishment procedure, and sends a session establishment request message to the AMF2 through the RAN2.

Step 1310: The AMF1 sends information used to distinguish the second path to the SMF.

The information used to distinguish the second path may be one or more of location information, an access type, an access technology type, a registration type, a RAN identifier, and an AMF identifier. The location information may be, for example, a ULI, and the ULI includes a cell identifier. The cell identifier is an identifier of a cell accessed by the UE in the RAN1. Since the UE accesses cells in different paths, the ULI may be used to identify different paths.

In a possible implementation, the information used to distinguish the second path implicitly indicates that the UE supports a multi-radio capability; or indicates that the UE supports a multi-registration capability, or indicates that the UE accesses a network in a multi-connection manner.

In another possible implementation, the AMF1 sends path identifier allocation information to the SMF. The path identifier allocation information indicates that the UE supports a multi-radio capability; or indicates that the UE supports a multi-registration capability, or indicates that the UE accesses a network in a multi-connection manner.

In a possible implementation, the AMF1 sends, to the SMF, information used to distinguish the second path by using a PDU session creation session management context request (Nsmf_PDUSession_CreateSMContext Request)) message, or a PDU session update session management context request (Nsmf_PDUSession_UpdateSMContext Request)) message.

Step 1311: The SMF sends, to the UDM, information used to distinguish the second path.

In a possible implementation, the information used to distinguish the second path implicitly indicates that the UE supports a plurality of radio capabilities, or indicates allocation of a path identifier.

In another possible implementation, the SMF sends path identifier allocation information to the UDM, where the path identifier allocation information indicates path identifier allocation.

Step 1312: The UDM allocates a path identifier (for example, a path identifier).

In a possible implementation, the UDM allocates the path identifier based on the information used to distinguish the second path or the path identifier allocation information. For example, the UDM uses different paths for the same UE. (For example, the SUPIs of UEs on different paths are the same.), respectively allocate different path identifiers. Alternatively, the UDM allocates a globally unique identifier to each path, that is, when allocating the path identifier, the UDM does not distinguish between different paths of a same UE or different paths of different UEs. Optionally, the UDM may query the subscription data of the UE, so as to determine whether the UE is allowed to access the network by using dual connectivity. when the subscription data of the UE indicates that the UE is allowed to access the network by using dual connectivity, the path identifier is allocated. It may be understood that, when the UDM determines, based on the subscription data of the UE, that the UE is not allowed to use the dual connectivity access network, the UDM does not allocate the path identifier.

In a possible implementation, the UDM may store information used to distinguish the second path and the path identifier 2, or a correspondence between the information used to distinguish the second path and the path identifier 2, in the subscription data or context information corresponding to the UE.

In this embodiment, for example, the UDM allocates the path identifier 2 to the second path in which the AMF 2 is located.

Step 1313: The UDM sends the path identifier 2 to the SMF.

Optionally, the UDM further sends, to the SMF, the information used to distinguish the second path.

Step 1314 (optional): The SMF sends the path identifier 2 and the information used to distinguish the second path to the PCF.

In a possible implementation, the path identifier 2 and the information used to distinguish the second path are sent through a policy request message. For example, a policy association establishment request message (SM Policy Association Establishment Request) or a policy association modification request message (SM Policy Association Modification Request) message.

Step 1315: Refer to the relevant descriptions of steps 717 to 719 in FIG. 7. Details are not described herein again.

Step 1316: AMF2 sends, to UE through RAN2, the traffic steering rule and the path identifier 2.

For related descriptions, refer to the relevant descriptions of step 1009 in FIG. 10. Details are not described herein again.

By performing the steps of method 1300, when the UE accesses the network through two paths of a 3GPP access type, the UDM allocates a path identifier, and the UE receives, from the first path, the traffic steering rule that includes the first path identifier, and receives, from the second path, the traffic steering rule that includes the second path identifier. In this way, both the UE and the network can distinguish two different paths based on the path identifier, and then the UE can transmit service data through the path corresponding to the path identifier based on the traffic steering rule corresponding to the service data, thereby improving transmission efficiency.

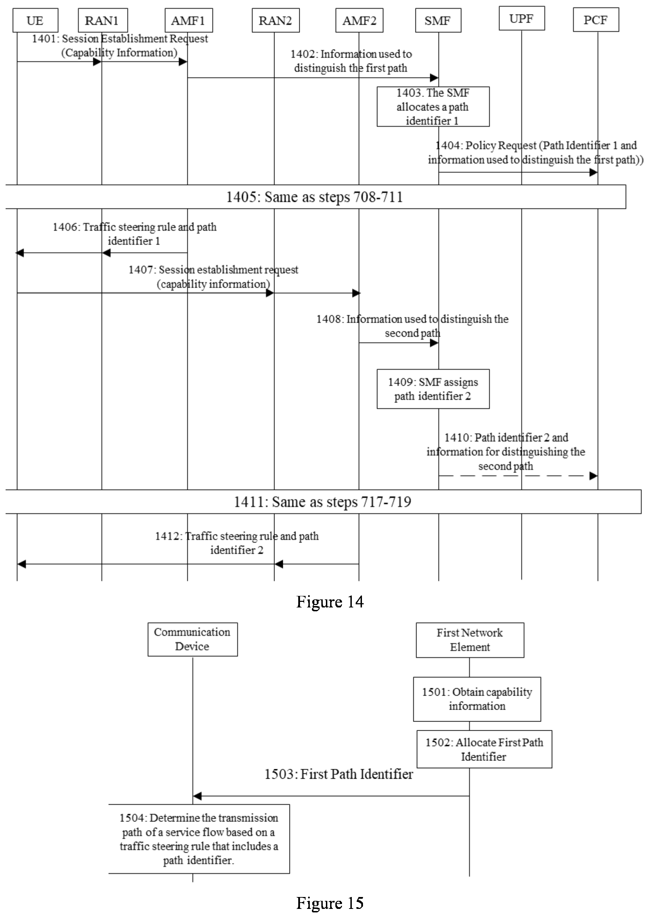

As shown in Figure 14, a method 1400 applicable to this application is described. This method is applicable when UE accesses a network through multiple paths of the same access type (for example, two paths of the 3GPP access type)). In method 1400, in a session establishment procedure, the SMF allocates a path identifier to the UE. The SMF generates a traffic steering rule based on the path identifier. The UE obtains the path identifier and the traffic steering rule. Through method 1400, the UE can determine a transmission path of service data based on the path identifier. This method includes the following steps:
Step 1401: The UE sends a session establishment request message to the AMF1 through the RAN1.

The session establishment request message includes capability information. For a related description of the capability information, refer to step 601 in Figure 6, which is not repeated here.

In a possible implementation, the session establishment request message is a PDU session establishment request (PDU Session Establishment Request) message. For a related description of the PDU session establishment request message, refer to step 301 in Figure 3.

This embodiment is described by using an example in which the UE selects the RAN1 as the first path to initiate a session establishment procedure, and sends the session establishment request message to the AMF1 by using the RAN1.

Step 1402: The AMF 1 sends, to the SMF, information used to distinguish the first path.

The information used to distinguish the first path may be one or more of location information, an access type, an access technology type, a registration type, a RAN identifier, and an AMF identifier. The location information is, for example, a ULI, where the ULI includes a cell identity, and the cell identity is an identity of a cell in the RAN1 to which the UE accesses. Because the UE accesses different cells on different paths, the different paths may be identified by using the ULI. For example, the information used to distinguish the first path is a RAT type. For example, a RAT type corresponding to the first path connecting the RAN 1 and the AMF 1 is 6G, and a RAT type corresponding to the second path connecting the RAN 2 and the AMF 2 is 5G. Therefore, the SMF may subsequently determine, based on the path identifier 1, to send data to the AMF 1 on the first path corresponding to 6G.

In a possible implementation, the information used to distinguish the first path implicitly indicates that the UE supports a multi-radio capability; or indicates that the UE supports a multi-registration capability, or indicates that the UE accesses a network in a multi-connection manner.

In another possible implementation, the AMF1 sends path identifier allocation information to the SMF. The path identifier allocation information indicates that the UE supports a multi-radio capability; or indicates that the UE supports a multi-registration capability, or indicates that the UE accesses a network in a multi-connection manner.

In a possible implementation, the AMF1 sends, to the SMF, information used to distinguish the first path by using a PDU session creation session management context request (Nsmf_PDUSession_CreateSMContext Request)) message, or a PDU session update session management context request (Nsmf_PDUSession_UpdateSMContext Request)) message.

Step 1403: The SMF allocates a path identifier (for example, a path identifier).

In a possible implementation, the SMF allocates the path identifier based on information used to distinguish the first path or the path identifier allocation information.

In this embodiment, for example, the SMF allocates the path identifier 1 to the first path in which the AMF 1 is located.

In a possible implementation, the SMF may store the information used to distinguish the first path or the path identifier allocation information, and the path identifier 1 corresponding to the path identifier allocation information, in the context information corresponding to the UE.

Step 1404: The SMF sends a policy request message to the PCF.

The policy request message includes a path identifier and information used to distinguish paths. For related descriptions, refer to step 1204 in FIG. 12, and details are not described herein again.

Step 1405: Refer to the related descriptions of steps 708 to 711 in FIG. 7, and details are not described herein again.

Step 1406: AMF1 sends a traffic steering rule and the path identifier 1 to the UE through RAN1.

For related descriptions, refer to the related descriptions of step 1007 in FIG. 10, and details are not described herein again.

Step 1407: The UE sends a session establishment request message to AMF2 through RAN2.

The session establishment request message includes capability information. For a related description of the capability information, refer to step 601 in FIG. 6, and details are not described herein again.

In a possible implementation, the session establishment request message is a PDU session establishment request (PDU Session Establishment Request) message. For a related description of the PDU session establishment request message, refer to step 301 in FIG. 3, and details are not described herein again.

This embodiment takes as an example an introduction in which the UE selects the RAN2 as the first path to initiate a session establishment procedure, and sends a session establishment request message to the AMF2 through the RAN2.

Step 1408: AMF1 sends information used to distinguish the second path to the SMF.

The information used to distinguish the second path may be one or more of location information, an access type, an access technology type, a registration type, a RAN identifier, and an AMF identifier. The location information may be, for example, ULI. The ULI includes a cell identifier, and the cell identifier is an identifier of a cell in which the UE accesses the RAN1. Since the UE accesses different cells through different paths, the ULI may be used to identify different paths.

In a possible implementation, the information used to distinguish the second path implicitly indicates that the UE supports a multi-radio capability; or indicates that the UE supports a multi-registration capability, or indicates that the UE accesses a network in a multi-connection manner.

In another possible implementation, the AMF1 sends path identifier allocation information to the SMF. The path identifier allocation information indicates that the UE supports a multi-radio capability; or indicates that the UE supports a multi-registration capability, or indicates that the UE accesses a network in a multi-connection manner.

In a possible implementation, the AMF1 sends, to the SMF, information used to distinguish the second path by using a PDU session creation session management context request (Nsmf_PDUSession_CreateSMContext Request)) message, or a PDU session update session management context request (Nsmf_PDUSession_UpdateSMContext Request)) message.

Step 1409: The SMF allocates a path identifier (for example, a path identifier).

In a possible implementation, the SMF allocates the path identifier based on the information used to distinguish the second path or the path identifier allocation information. For example, the SMF uses different paths for the same UE. (For example, the SUPIs of UEs on different paths are the same.), respectively allocate different path identifiers. Alternatively, the SMF allocates a globally unique identifier to each path, that is, when allocating the path identifier, the SMF does not distinguish between different paths of a same UE or different paths of different UEs.

In this embodiment, an example in which the SMF allocates the path identifier 2 to the second path on which the AMF 2 is located is used for description.

In a possible implementation, the SMF may store, in the context information corresponding to the UE, the information used to distinguish between the second path and the path identifier 2, or the correspondence between the information used to distinguish between the second path and the path identifier 2.

Step 1410 (optional): The SMF sends, to the PCF, the path identifier 2 and the information used to distinguish the second path.

In a possible implementation, the path identifier 2 and the information used to distinguish the second path are sent through a policy request message. For example, a policy association establishment request message (SM Policy Association Establishment Request) or a policy association modification request message (SM Policy Association Modification Request) message.

Step 1411: Refer to the relevant descriptions of steps 717 to 719 in FIG. 7. Details are not described herein again.

Step 1412: AMF2 sends the traffic steering rule and the path identifier 2 to the UE through RAN2.

For related descriptions, refer to the relevant descriptions of step 1009 in FIG. 10. Details are not described herein again.

By performing the steps of method 1400, when the UE accesses the network through two paths of a 3GPP access type, the SMF allocates a path identifier, and the UE receives, from the first path, the traffic steering rule that includes the first path identifier, and receives, from the second path, the traffic steering rule that includes the second path identifier. In this way, both the UE and the network can distinguish two different paths based on the path identifier, and then the UE can transmit service data through the path corresponding to the path identifier based on the traffic steering rule corresponding to the service data, thereby improving transmission efficiency.

Below, in conjunction with the accompanying Figure 15, an embodiment of a method 1500 provided by this application is described. It should be noted that, here, Figure 15 is used as an example for description. This method is applicable to any one of the processes in Figures 6 to 14. The communication apparatus may be a terminal device (for example, UE 110 in Figure 1), or may be a chip (system) disposed in the terminal device. In other words, the method 1500 may be executed by the terminal device, or may be executed by a chip (system) in the terminal device.

As shown in Figure 15, a schematic flowchart of a communication method according to an embodiment of this application may include the following steps:
Step 1501: The first network element obtains capability information.

In a possible implementation, the communication apparatus sends a capability message to the first network element.

In another possible implementation, the first network element obtains the capability information of the communication apparatus from the subscription data. The first network element is an AMF, and for a related description of obtaining capability information from subscription data, refer to step 608 in FIG. 6.

In a possible implementation, the first network element is an AMF, and for related descriptions about sending capability information by the communication apparatus to the AMF, refer to step 601 to step 603 in FIG. 6.

In a possible implementation, the AMF selects, based on the capability information, a session management network element supporting multi-connections. The session management network element supporting multi-connections is a session management network element supporting generation of the traffic steering rule including the first path identifier. The session management network element supporting multi-connections may be understood as that the session management network element can identify a newly-added parameter, for example, a path identifier, and support generation of an traffic steering rule including the path identifier.

In another possible implementation, the first network element is a UDM, and for related descriptions about sending capability information by the communication apparatus to the UDM, refer to step 801 to step 805 in FIG. 8.

In still another possible implementation, the first network element is an SMF, and for related descriptions about sending capability information by the communication apparatus to the SMF, refer to step 1401 to step 1402 in FIG. 14.

Step 1502: The first network element allocates a first path identifier.

In a possible implementation, the first network element is an AMF, and for related description of allocating the path identifier, refer to step 605 in FIG. 6.

In a possible implementation, the AMF sends the first path identifier to the session management network element. For related descriptions, refer to step 703 in FIG. 7. For related descriptions, refer to step 711 in FIG. 7 for receiving the traffic steering rule that includes the first path identifier from the session management network element, and for sending the traffic steering rule to the communication apparatus. For related descriptions, refer to steps 712 to 713 in FIG. 7.

In another possible implementation, the first network element is a UDM, and for related description of allocating the path identifier, refer to step 806 in FIG. 8.

In a possible implementation, the UDM sends the first path identifier and the information used to distinguish paths to the session management network element and/or the data storage network element. The information used to distinguish paths is used by the session management network element to distinguish between different paths. For related descriptions about sending, by the UDM, the first path identifier and the path differentiation information to the session management network element, refer to step 904 in FIG. 9. For related descriptions of sending, by the UDM, the first path identifier and the path distinguishing information to the data storage network element, refer to step 817 in FIG. 8. The data storage network element may send the information to the policy control network element.

In another possible implementation, the first network element is an SMF. For related descriptions of the allocation of the path identifier, refer to step 1403 in Figure 14.

In one possible implementation, the SMF generates a traffic steering rule that includes the first path identifier; and sends the traffic steering rule to the communication apparatus. The traffic steering rule is used by the communication apparatus to determine the transmission path of the service flow. For related descriptions, refer to step 710 in Figure 7.

Step 1503: The first network element sends the first path identifier to the communication apparatus.

In one possible implementation, the first network element is an AMF. For related descriptions of the sending of the first path identifier to the communication apparatus, refer to step 609 in Figure 6 or step 1007 in Figure 10 or step 1206 in Figure 12.

In another possible implementation, step 1503 includes: the first network element sends the first path identifier to the communication apparatus.

In another possible implementation, the first network element is an SMF. For a related description of sending the first path identifier to the communication apparatus by the SMF, refer to steps 1405-1406 in FIG. 14.

In a possible implementation, the communication apparatus allocates a path identifier through a session procedure. This enables the path identifier to be used only when the UE needs to establish a multi-access session. At this time, the core network device that allocates the path identifier may be an AMF, UDM, SMF, or PCF. The present invention does not limit the first network element that allocates the path identifier. The path identifier may be at a path granularity or at a session granularity. When the path identifier is at a session granularity, different sessions may be established through the same access network, and the different sessions correspond to different path identifiers.

Step 1504: The communication apparatus determines a transmission path of a service flow based on a steering rule that includes a path identifier.

In a possible implementation, the communication apparatus receives a steering rule including a first path identifier. For a related description, refer to step 713 in FIG. 7, or step 1007 in FIG. 10, or step 1107 in FIG. 11, or step 1206 in FIG. 12, or step 1308 in FIG. 13, or step 1406 in FIG. 14.

In a possible implementation, the traffic steering rule includes service flow information and a first path identifier. The communication apparatus determines, based on the first path identifier, that the service flow corresponding to the uplink service flow information is transmitted on the first path. For related descriptions, refer to step 713 in FIG. 7.

The communication apparatus may also obtain the path identifier when establishing a session through the multiple different paths of the same access type. Then, the communication apparatus may learn, by using the traffic steering rule that includes the path identifier, which transmission path the service data should be transmitted through to perform a service, and transmit the service data through the path corresponding to the path identifier, thereby improving transmission efficiency.

The communication apparatus may also obtain the path identifier when establishing a session through the multiple different paths of the same access type. Then, the communication apparatus may learn, by using the traffic steering rule that includes the path identifier, which transmission path the service data should be transmitted through to perform a service, and transmit the service data through the path corresponding to the path identifier, thereby improving transmission efficiency.

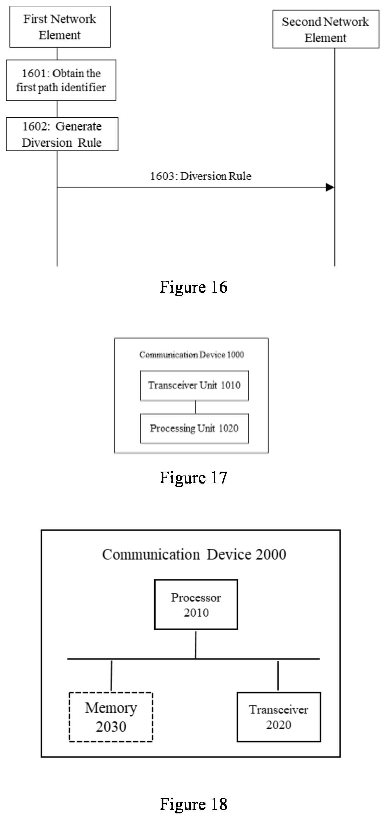

Below, in conjunction with the accompanying Figure 16, an introduction is provided to a method 1600 according to an embodiment of this application. It should be noted that, herein, Figure 16 is used as an example for description. This method is applicable to any one of the processes in Figures 6 to 15.

As shown in Figure 16, the schematic flowchart of a communication method may include the following steps:
Step 1601: The first network element obtains a first path identifier.

In a possible implementation, the first network element is an SMF. For a related description of how the SMF obtains the first path identifier, refer to step 703, step 704, or step 708 in Figure 7, or refer to step 1203 in Figure 12, or step 1305 in Figure 13, or step 1403 in Figure 14.

Step 1602: The first network element generates a steering rule.

In a possible implementation, the first network element is an SMF, and the SMF generates the traffic steering rule based on the first path identifier. For related descriptions, refer to step 710 in FIG. 7.

Step 1603: The first network element sends the traffic steering rule to the second network element.

In a possible implementation, the second network element is a UPF, and for related descriptions about sending, by the first network element, the traffic steering rule to the UPF, refer to step 710 in FIG. 7.

In a possible implementation, the UPF may learn, by using the traffic steering rule that includes the path identifier, a transmission path by which the service data should be transmitted to the downlink service data, and transmit the service data by using a path corresponding to the path identifier, thereby improving transmission efficiency.

The foregoing describes in detail the communication method side embodiments of this application with reference to FIG. 6 to FIG. 16, and the following describes in detail the communication apparatus side embodiments of this application with reference to FIG. 17 to FIG. 19. It should be understood that the description of the apparatus embodiment corresponds to the description of the method embodiment. Therefore, for a part that is not described in detail, refer to the foregoing method embodiment.

Figure 17 is a schematic structural diagram of a communication apparatus 1000 according to an embodiment of this application. As shown in Figure 17, the apparatus 1000 may include a transceiver unit 1010 and a processing unit 1020. The transceiver unit 1010 may communicate with the outside, and the processing unit 1020 is configured to perform data processing. The transceiver unit 1010 may also be referred to as a communication interface or a transceiver unit.

In a possible design, the apparatus 1000 may implement steps or processes corresponding to the first network element performing in the method embodiment described above. The processing unit 1020 is configured to perform operations related to processing performed by the first network element in the method embodiment described above. The transceiver unit 1010 is configured to perform operations related to receiving and sending performed by the first network element in the method embodiment described above.

In another possible design, the apparatus 1000 may implement steps or processes corresponding to the communication apparatus performing in the method embodiment described above. The transceiver unit 1010 is configured to perform operations related to receiving and sending performed by the communication apparatus in the method embodiment described above. The processing unit 1020 is configured to perform operations related to processing performed by the communication apparatus in the method embodiment described above.

It should be understood that the apparatus 1000 herein is embodied in the form of functional units. The term "unit" herein may refer to an application-specific integrated circuit (application specific integrated circuit, ASIC)), an electronic circuit, a processor (for example, a shared processor, a dedicated processor, or a group processor) and a memory, a merged logic circuit, and/or other appropriate components that support the described functions. In an optional example, a person skilled in the art may understand that the apparatus 1000 may be specifically the transmit end in the foregoing embodiment, and may be configured to perform various processes and/or steps corresponding to the transmit end in the foregoing method embodiment. Alternatively, the apparatus 2000 may be specifically the receive end in the foregoing embodiment, and may be configured to perform various processes and/or steps corresponding to the receive end in the foregoing method embodiment. To avoid repetition, details are not described herein again.

The apparatus 1000 of each of the foregoing solutions has a function of implementing a corresponding step performed by the transmit end in the foregoing method. Alternatively, the apparatus 1000 of each of the foregoing solutions has a function of implementing a corresponding step performed by the receive end in the foregoing method. The function may be implemented by hardware, or may be implemented by hardware executing corresponding software. The hardware or software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver)). Other units, such as a processing unit, may be replaced by a processor, to separately perform the receiving and sending operations and related processing operations in each method embodiment.

In addition, the transceiver unit may further be a transceiver circuit (for example, may include a receiving circuit and a sending circuit). The processing unit may be a processing circuit. In embodiments of this application, the apparatus 1000 may be the receive end or the transmit end in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

Figure 18 is a schematic structural diagram of a communication apparatus 2000 according to an embodiment of this application. As shown in Figure 18, the apparatus 2000 includes a processor 2010 and a transceiver 2020. The processor 2010 and the transceiver 2020 communicate with each other through an internal connection path. The processor 2010 is configured to execute instructions to control the transceiver 2020 to send and/or receive signals.

Optionally, the apparatus 2000 may further include a memory 2030. The memory 2030 communicates with the processor 2010 and the transceiver 2020 through an internal connection path. The memory 2030 is configured to store instructions, and the processor 2010 may execute the instructions stored in the memory 2030 to control the transceiver 2020 to send and/or receive signals.

In a possible implementation, the apparatus 2000 is configured to implement the various processes and steps corresponding to the first network element in the foregoing method embodiments.

In another possible implementation, the apparatus 2000 is configured to implement the various processes and steps corresponding to the communication apparatus in the foregoing method embodiments.

It should be understood that the apparatus 2000 may be specifically the transmit end or the receive end in the foregoing embodiment, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiment.

Optionally, the memory 2030 may include a read-only memory and a random access memory, and provide an instruction and data for the processor. A part of the memory may further include a nonvolatile random access memory. For example, the memory may further store information about a device type. The processor 2010 may be configured to execute the instruction stored in the memory, and when the processor 2010 executes the instruction stored in the memory, the processor 2010 is configured to perform the steps and/or procedures in the foregoing method embodiments corresponding to the transmit end or the receive end.

In an implementation process, the steps of the foregoing method may be completed by using an integrated logic circuit of hardware in the processor or an instruction in a form of software. The steps of the method disclosed with reference to the embodiments of this application may be directly performed by a hardware processor, or may be performed by using a combination of hardware and software modules in the processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor. To avoid repetition, details are not described herein again.

It should be noted that the processor in the embodiments of this application may be an integrated circuit chip, and has a signal processing capability. In an implementation process, the steps of the method embodiments described above may be completed by using an integrated logic circuit of hardware in the processor or by using instructions in a form of software. The processor described above may be a general-purpose processor, a digital signal processor, an application-specific integrated circuit, a field-programmable gate array or another programmable logic device, a discrete gate or transistor logic device, or a discrete hardware component. The processor in the embodiments of this application may implement or execute the methods, steps, and logical block diagrams disclosed in the embodiments of this application. The general-purpose processor may be a microprocessor, or the processor may also be any conventional processor, or the like. The steps of the method disclosed in the embodiments of this application may be directly reflected as being executed by a hardware decoding processor, or may be executed by a combination of hardware and software modules in the decoding processor. The software module may be located in a random access memory, a flash memory, a read-only memory, a programmable read-only memory, an electrically erasable programmable memory, a register, or another mature storage medium in the art. The storage medium is located in a memory, and the processor reads information in the memory and completes the steps of the method in combination with its hardware.

It can be understood that, in the embodiments of this application, the memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external high-speed cache. By way of example but not limitation, many forms of RAM are available, such as static random access memory, dynamic random access memory, synchronous dynamic random access memory, double data rate synchronous dynamic random access memory, enhanced synchronous dynamic random access memory, and direct memory bus random access memory. It should be noted that the memory of the system and method described in this specification is intended to include, but not limited to, these and any other memory of a suitable type.

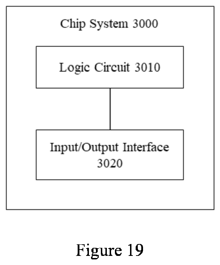

FIG. 19 is a schematic structural diagram of a chip system 3000 according to an embodiment of this application. As shown in FIG. 19, the chip system 3000 (which may also be referred to as a processing system)) includes a logic circuit 3010 and an input/output interface (input/output interface) 3020.

Among them, the logic circuit 3010 may be a processing circuit in the chip system 3000. The logic circuit 3010 may be coupled to a storage unit, invoke an instruction in the storage unit, so that the chip system 3000 can implement the methods and functions of the embodiments of this application. The input/output interface 3020 may be an input/output circuit in the chip system 3000, which outputs information processed by the chip system 3000, or inputs data or signaling information to be processed into the chip system 3000 for processing.

As a solution, the chip system 3000 is configured to implement the operations performed by the first network element in the method embodiments described above.

As a solution, the chip system 3000 is configured to implement the operations performed by the communication apparatus in the method embodiments described above.

The embodiments of this application further provide a computer-readable storage medium, which stores computer instructions used to implement the methods performed by the communication apparatus, the access and mobility management network element, and the radio access network device in the method embodiments described above.

The embodiments of this application further provide a computer program product, comprising computer program code or instructions. When the computer program code or instructions are run on a computer, the computer is enabled to implement the methods performed by the communication apparatus, the access and mobility management network element, and the radio access network device in the method embodiments described above.

The embodiments of this application further provide a communication system, including the foregoing communication apparatus and the first network element. Optionally, the communication system may further include a RAN, a UDR, or a PCF.

The embodiments of this application further provide a communication system, including the foregoing communication apparatus, the first network element, and optionally, the communication system may further include a RAN, a UDR, or a PCF.
1) In this application, unless otherwise specified or there is a logical conflict, the terms and/or descriptions in different embodiments are consistent and may be mutually referenced. The technical features in the different embodiments may be combined to form a new embodiment according to their inherent logical relationships.
2) In this application, "at least one" means one or more, and "a plurality of" means two or more. "And/or" describes an association relationship between associated objects, and indicates that three relationships may exist. For example, "A and/or B" may indicate the following cases: A alone, both A and B, and B alone. In these cases, A and B may be singular or plural. In the text description of this application, the character "/" generally indicates that an association relationship between the associated objects is an "or" relationship. "At least one of the following items (pieces)" or similar expressions refer to any combination of these items, including any combination of a single item (piece) or multiple items (pieces). For example, "at least one of a, b, and c (pieces)" may indicate the following cases: a, or, b, or, c, or, a and b, or, a and c, or, b and c, or, a, b, and c. In these cases, a, b, and c may be singular or plural.
3) In this application, "first," "second," and various numerical designations (e.g., #1, #2, etc.) indicate distinctions made for the purpose of convenient description. These designations are not intended to limit the scope of the embodiments of this application. For example, they distinguish between different messages, rather than being used to describe a specific sequence or order of precedence. It should be understood that the objects described in this way can be interchanged in appropriate circumstances, so as to describe solutions other than the embodiments of this application.
4) In this application, descriptions such as "when...," "in the case of...," and "if' refer to the device performing corresponding processing under certain objective conditions. These descriptions are not intended to limit the time, nor do they require the device to have a judgment action when implementing the processing. Nor do they imply the existence of other limitations.
5) In this application, "used to indicate" may include being used to directly indicate and being used to indirectly indicate. When it is described that certain indication information is used to indicate A, it may include that the indication information directly indicates A or indirectly indicates A, but this does not mean that the indication information must carry A.
   The indication method involved in the embodiments of this application should be understood as encompassing various methods that can enable a to-be-indicated party to learn the to-be-indicated information. The to-be-indicated information may be sent as a whole, or may be divided into multiple pieces of sub-information and sent separately. Moreover, the sending periods and/or sending opportunities of these pieces of sub-information may be the same or different. This application does not impose any specific limitation on the sending method.
6) In the embodiments of this application, the "indication information" may be an explicit indication, that is, directly indicated through signaling, or obtained by combining parameters indicated by the signaling with other rules or other parameters or through derivation. It may also be an implicit indication, that is, obtained by combining rules or relationships or other parameters or through derivation. This application does not impose any specific limitation on this.
6) In this application, the "protocol" may refer to a standard protocol in the communications field. For example, it may include a 5G protocol, an NR protocol, and a related protocol applied to a future communication system. This application does not impose any specific limitation on this. "Predefinition" may include predefinition. For example, it may be defined by a protocol. "Preconfiguration" may be implemented by pre-storing corresponding code, tables, or other methods that can be used to indicate related information in a device. This application does not impose any specific limitation on its specific implementation method.
7) In this application, "communication" may also be described as "data transmission," "information transmission," "data processing," and the like. "Transmission" includes "sending" and "receiving."

A person of ordinary skill in the art can realize that, in combination with the descriptions of the embodiments disclosed in this specification, the units and algorithm steps of each example can be implemented by electronic hardware or a combination of computer software and electronic hardware. Whether these functions are performed by hardware or software depends on specific application and design constraints of the technical solutions. Professional technicians can use different methods to implement the described functions for each specific application. However, such implementation should not be considered as going beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored. Or not perform. In addition, the displayed or discussed mutual couplings or direct couplings or communication connections may be implemented by using some interfaces, and the indirect couplings or communication connections between apparatuses or units may be implemented in electrical, mechanical, or other forms.

The units described as separate components may or may not be physically separate. The parts displayed as units may or may not be physical units, that is, they may be located in one place, or may be distributed over multiple network units. According to actual needs, some or all of the units may be selected to achieve the objectives of the solutions in this embodiment.

Additionally, in the various embodiments of this application, the functional units may be integrated into one processing unit, or may exist physically as separate units. Alternatively, two or more units may be integrated into one unit.

If the functions are implemented in the form of software functional units and sold or used as independent products, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device to perform all or some of the steps of the methods described in the various embodiments of this application. The aforementioned storage medium includes: a USB flash drive, a removable hard disk, a read-only memory, a random access memory, a magnetic disk, or an optical disc of any kind that can store program code.

As described above, this is merely a specific implementation of this application. However, the protection scope of this application is not limited thereto. Any variation or replacement that can be easily conceived by a person skilled in the art within the technical scope disclosed in this application shall fall within the protection scope of this application. Therefore, the protection scope of this application shall be determined according to the protection scope of the claims described above.

## Claims

1. A communication method, **characterized in that** the method comprises:
obtaining, by a first network element, capability information, wherein the capability information indicates that the communication apparatus supports multi-connections, the multi-connections comprise at least two paths with the same access type, and the at least two paths comprise a first path connecting the communication apparatus and a first radio access network device;
allocating, by the first network element based on the capability information, a first path identifier corresponding to the first path;
sending, by the first network element to the communication apparatus through the first path, the first path identifier, wherein the first path identifier is used by the communication apparatus to determine the first path from the at least two paths.

2. The method according to claim 1, wherein the obtaining, by the first network element, capability information comprises:
receiving, by the first network element from the first path, the capability information; or
obtaining, by the first network element from subscription data of the communication apparatus, the capability information.

3. The method according to claim 1 or 2, wherein the first network element is an access and mobility management network element, and the method further comprises:
sending, by the access and mobility management network element, the first path identifier to a session management network element; and;
receiving, from the session management network element, an traffic steering rule comprising the first path identifier;
sending the traffic steering rule to the communication apparatus, wherein the traffic steering rule is used by the communication apparatus to determine a transmission path of a service flow, and the transmission path is one or more paths of the at least two paths.

4. The method according to claim 3, wherein the method further comprises:
selecting, by the access and mobility management network element according to the capability information, a session management network element supporting multi-connections; and; the session management network element supporting multi-connectivity is a session management network element supporting generation of the traffic steering rule comprising the first path identifier.

5. The method according to claim 1 or 2, wherein the first network element is an access and mobility management network element, and the method further comprises:
obtaining, by the access and mobility management network element, information used to distinguish paths, wherein the information used to distinguish paths is different in the at least two paths.

6. The method according to claim 5, wherein the obtaining, by the access and mobility management network element, of information used to distinguish paths comprises:
receiving, by the access and mobility management network element from the first radio access network device, the information used to distinguish paths; or
determining, by the access and mobility management network element based on the first radio access network device, the information used to distinguish paths.

7. The method according to claim 5 or 6, wherein the method further comprises:
storing, by the access and mobility management network element, the first path identifier and the information used to distinguish paths.

8. The method according to any one of claims 5 to 7, wherein the method further comprises:
sending, by the access and mobility management network element to a data management network element, the first path identifier and the information used to distinguish paths.

9. The method according to claim 8, wherein the method further comprises:
selecting, by the access and mobility management network element according to the capability information, a data management network element supporting multi-connections; and; The data management network element supporting multi-connections is a data management network element supporting storing multiple contexts of the communication apparatus.

10. The method according to any one of claims 5 to 9, wherein the information used to distinguish paths is one or more of the following information: location information, an access technology type, a registration type, and an identifier of the first radio access network device; and the location information indicates information about an access node that is used by the communication apparatus to access a network; and; the access technology type indicates a type of an access technology used by the communication apparatus to access a network by using the first path; and
the registration type indicates a registration type in which the communication apparatus registers with a network by using the first path.

11. The method according to claim 1 or 2, wherein the first network element is a data management network element, and before the allocating, by the first network element according to the capability information, a first path identifier corresponding to the first path, the method further comprises:
querying, by the data management network element, subscription data of the communication apparatus; and;
when the subscription data of the communication apparatus is such that the communication apparatus is authorized to access the network through multiple connections, the first path identifier is allocated.

12. The method according to claim 1 or 2, wherein the first network element is a data management network element, and the method further comprises:
receiving, by the data management network element from an access and mobility management network element, information used to distinguish paths, wherein the information used to distinguish paths is different in the at least two paths.

13. The method according to claim 12, wherein the method further comprises:
storing, by the data management network element, the first path identifier and the information used to distinguish paths.

14. The method according to claim 12 or 13, wherein the method further comprises:
sending, by the data management network element to a session management network element and/or a data storage network element, the first path identifier and the information used to distinguish paths.

15. The method according to claim 1 or 2, wherein the first network element is a session management network element, and the method further comprises:
receiving, by the session management network element from an access and mobility management network element, information used to distinguish paths, wherein the information used to distinguish paths is different in the at least two paths.

16. The method according to claim 15, wherein the method further comprises:
storing, by the session management network element, the first path identifier and the information used to distinguish paths.

17. The method according to claim 15 or 16, wherein the method further comprises:
sending, by the session management network element to the access and mobility management network element, the first path identifier and the information used to distinguish paths.

18. The method according to any one of claims 15 to 17, wherein the method further comprises:
generating, by the session management network element, a traffic steering rule comprising the first path identifier; and
sending, by the session management network element to the communication apparatus, the traffic steering rule, wherein the traffic steering rule is used by the communication apparatus to determine a transmission path of a service flow.

19. The method according to claim 18, wherein the traffic steering rule comprises a priority of the first path, and the information used to distinguish paths is used to determine the priority of the first path.

20. The method according to any one of claims 15 to 19, wherein the method further comprises:
selecting, by the session management network element based on the capability information, a user plane network element supporting multi-connectivity, wherein the user plane network element supporting multi-connectivity is a user plane network element supporting data steering based on a traffic steering rule comprising the first path identifier.

21. A communication method, **characterized in that** the method comprises:
receiving, by a communication apparatus through a first path connecting the communication apparatus and a first radio access network device, a first path identifier, and receiving, by the communication apparatus through a second path connecting the communication apparatus and a second radio access network device, a second path identifier;
receiving, by the communication apparatus, a traffic steering rule, wherein the traffic steering rule comprises service flow information and the first path identifier and/or the second path identifier; and
determining, by the communication apparatus based on the first path identifier and/or the second path identifier, a transmission path of a service flow corresponding to the service flow information.

22. The method according to claim 21, **characterized in that** before the communication apparatus receives the first path identifier and the second path identifier, the method further includes:
sending, by the communication apparatus, capability information, wherein the capability information indicates that the communication apparatus supports multiple connections, the multiple connections comprise at least two paths with a same access type, and the at least two paths comprise the first path and the second path.

23. The method according to claim 21 or 22, wherein the traffic steering rule comprises a priority of the first path and/or a priority of the second path, and before the communication apparatus determines the transmission path of the service flow based on the first path identifier and/or the second path identifier, the method further includes:
determining, by the communication apparatus, the path identifier of the transmission path of the service flow based on the priority of the first path and/or the priority of the second path.

24. The method according to any one of claims 21 to 23, wherein the determining, by the communication apparatus based on the first path identifier and/or the second path identifier, a transmission path of a service flow corresponding to the service flow information comprises:
determining, by the communication apparatus based on the first path identifier, that the service flow corresponding to the service flow information is transmitted on the first path; and/or
determining, by the communication apparatus based on the second path identifier, that the service flow corresponding to the service flow information is transmitted on the second path.

25. The method according to any one of claims 21 to 24, wherein the method further comprises:
storing, by the communication apparatus, the first path identifier and first path information, and the second path identifier and second path information;
wherein the first path information is used by the communication apparatus to determine the first path, and the second path information is used by the communication apparatus to determine the second path.

26. The method according to claim 25, wherein the first path information is one or more of the following information:
an access technology type corresponding to the first path, a registration type of the first path, a protocol stack used by the first path, a port corresponding to the first path, an interface corresponding to the first path, a link corresponding to the first path, or an identifier of the first wireless access network device.
The second path information is one or more of the following information: the access technology type corresponding to the second path, the registration type of the second path, the protocol stack used by the second path, the port corresponding to the second path, the interface corresponding to the second path, the link corresponding to the second path, or the identifier of the second radio access network device.

27. The method according to any one of claims 1-26, wherein the access type corresponding to the at least two paths with the same access type is a 3rd Generation Partnership Project (3GPP) access type or a non-3GPP access type.

28. A first network element, comprising: a module configured to perform the communication method according to any one of claims 1 to 20 or claim 27.

29. A communication apparatus, comprising: a module configured to perform the communication method according to any one of claims 21 to 27.

30. A computer-readable storage medium, **characterized by** comprising: the computer program or instructions are stored on the computer-readable storage medium. When the computer program or instructions are run on a computer, the computer is enabled to perform the method according to any one of claims 1 to 27.
